# EUROPEAN PATENT APPLICATION

(11) **EP 4 830 848 A1**
(43) Date of publication of application: **28.10.2026**
(21) Application number: 26173016.2
(22) Date of filing: 17.04.2026
(51) Int. Cl.: B21D 39/03, B21D 53/36, F16B 5/04, F16B 5/06, B21D 53/74

(54) **CLINCHING CLIP APPARATUS**

(30) Priority: 25.04.2025 US 202563794432 P; 10.04.2026 US 202619644021
(71) Applicant: BTM Company LLC, Marysville MI 48040 (US)
(72) Inventor: KEMENY, Thomas Edward, Marysville, 48040 (US); PETIT, Brian Douglas, Clay, 48001 (US); JONES, Ryan Thomas, Port Huron, 48060 (US); SU, Jianqing, Marysville, 48040 (US)
(74) Representative: Kiwit, Benedikt

(57) **Abstract**

A clinching clip apparatus is provided. A further aspect of a sheet fastening or joining system includes a clip having spaced apart segments which sandwich at least one sheet panel therebetween, with the clip segments each being thicker than the sheet panel(s). Another aspect clinches together mullions that retain windows, such as in a garage door. A further aspect employs a clip clinched onto workpiece sheets by a movable punch and a die on an opposite side of the sheets.

## Description

### BACKGROUND AND SUMMARY

The present disclosure generally pertains to a fastening system and more particularly to a clinching clip apparatus.

It is well known to employ a punch and die assembly to create a clinch joint within sheet metal workpieces located therebetween. Examples of such clinch joints and the associated punch and die assemblies employed to manufacture such, are disclosed in the following U.S. patents invented by Sawdon, et al., which are commonly owned with the present application: 8,650,730 entitled "Clinching Tool" which issued on February 18, 2014; 7,694,399 entitled "Sheet Fastening Apparatus and Method" which issued on April 13, 2010; 6,430,795 entitled "Composite Urethane Stripper for Metal Joining Apparatus" which issued on August 13, 2002; 5,860,315 entitled "Device for Securing Tools" which issued on January 19, 1999; and 5,150,513 entitled "Apparatus for Joining Sheet Material" which issued on September 29, 1992. While these devices were significant improvements in the industry, there is room for further improvement when very thin or brittle sheets need to be clinched together.

In accordance with the present invention, a clinching clip apparatus is provided. A further aspect of a sheet fastening or joining system includes a clip having spaced apart segments which sandwich at least one sheet panel therebetween, with the clip segments each being thicker than the sheet panel(s). In another aspect, a generally C-shaped or M-shaped reinforcement includes bifurcated and spaced apart segments, with a hole in one of the segments, and the other segment being deformed into a clinching joint. Still another aspect clinches together mullions that retain windows, such as in a garage door. A further aspect employs a reinforcement clip clinched onto workpiece sheets by a movable punch and a die on an opposite side of the sheets. A method of clinching a reinforcement clip onto at least one workpiece sheet is additionally provided.

In particular, according to a first aspect, the present invention is directed to a clinching apparatus comprising a metallic clip. The clip comprises a junction. The clip comprises overlapping legs connected by the junction, the legs being spaced apart from each other and having an opening therebetween which is configured to receive at least one workpiece, and the legs being configured to sandwich the at least one workpiece therebetween. The clip comprises a clinch joint formed by a deformed section of the clip associated with a first of the legs, interlocking with a second section of the clip associated with a second of the legs, the clinch joint being configured to secure the clip to the at least one workpiece. The clinch joint being internally located away from a periphery of the clip. The clip having a lateral width dimension at least ten times greater than a thickness dimension of each of the legs.

The clip may further comprise an overhanging section of the clip being configured to protrude beyond a peripheral edge of the at least one workpiece; and the overhanging section may have a longitudinal length, measured from the peripheral edge to an exterior surface of the junction, greater than a width of the clinch joint.

The overhanging section may include a threaded fastener.

The overhanging section may include a hook.

The overhanging section may include a wire, cable or conduit-holding ring.

The overhanging section may include an enlarged and mostly cylindrical ring at the junction, configured to receive a hinge pin, the ring having a lateral centerline through a hollow internal are which is raised above a plane defined by an intersection of the workpieces within the clip.

Each of the legs of the clip may further comprise an intermediate section longitudinally located between the junction and a clevis section having an internal cavity therein. At least one of the intermediate sections may be depressed below a nominal plane defined by an exterior surface of the clevis section and a distal end section of the associated one of the legs. Internal surfaces of the intermediate sections may contact against each other within an aperture in the at least one workpiece. The clinch joint may be located within the intermediate sections.

The clevis section may trap a spanning portion of the at least one workpiece between the aperture and a peripheral edge of the at least one workpiece, and the spanning portion being longitudinally located between the clinch joint and the junction.

The apparatus may further comprise a threaded fastener attached to the clip and extending through a hole in the at least one workpiece and aligned holes in the clevis section of the clip.

The intermediate section may have a depressed and arcuate shape, inwardly spaced from a periphery of the clip.

The intermediate section may have a depressed and substantially polygonal shape, inwardly spaced from a periphery of the clip.

The apparatus may further comprise a die including an anvil contacting against one of the legs of the clip, and a punch oppositely contacting against another of the legs of the clip when deforming the clip to create the clinch joint.

The apparatus may further comprise a second punch and a second anvil contacting against the legs of the clip, to create a second clinch joint, wherein the first and second clinch joints are diagonally offset from each other with one being closer to the junction than the other.

The at least one workpiece may include multiple workpiece sheets being thinner or more brittle than the legs of the clip. The clip may be generally U-shaped with a curved or straight walled shape of the junction. The legs may be substantially parallel where the contact against the multiple workpiece sheets, when the multiple workpiece sheets are secured between the legs.

The at least one workpiece may further comprise door window mullions, the mullions including side walls, and at least one of the mullions including a flange, the clip clinching the flange of one of the mullions to a sidewall of another of the mullions.

One of the legs may have a pre-drilled or pre-punched hole therein through which the clinch joint is formed.

The clip may be clinched adjacent to a corner of the at least one workpiece and the opening of the clip diagonally faces toward the corner.

The apparatus may further comprise a threaded fastener attached to and externally extending from an exterior surface of the clip between the junction and the clinch joint.

The apparatus may further comprise a hem on the at least one workpiece, which includes multiple overlapping workpieces, and the junction of the clip having an internal surface enlarged beyond an adjacent inboard section of the clip to receive the hem within the internal surface.

The clip may further comprise an elongated slot between multiples of the clinch joint.

The junction may have a greater lateral width than a lateral width of the legs.

The at least one workpiece may include multiple workpiece sheets that form at least part of an enclosed battery housing.

At least one of the legs of the clip may include teeth configured to pierce through a workpiece coating and create an electrically conductive interconnection with the at least one workpiece.

The apparatus may further comprise retention tabs inwardly bent from at least one of the legs, the retention tabs being configured to temporarily hold the clip to the at least one workpiece before the clinch joint is deformed to interlock together the legs.

According to another aspect, the present invention is directed to a clinching apparatus. The clinching apparatus comprises multiple workpiece sheets including peripheral edges thereof. The clinching apparatus further comprises a metallic and substantially U-shaped clip comprising overlapping legs connected by a junction, the legs being spaced apart from each other and having an opening which receives the workpiece sheets, the legs sandwiching the workpiece sheets therebetween. The clinching apparatus further comprises a clinch joint created between segments of the clip associated with the legs, the clinch joint causing the legs to compress against the workpiece sheets. The clip having a different characteristic than at least one of the workpiece sheets, wherein at least one of: (a) a thickness of one of the legs is greater than a thickness of the at least one of the workpiece sheets, or (b) the legs are less brittle than the at least one of the workpiece sheets.

The clip may further comprise intermediate sections of the legs being longitudinally located between the junction and workpiece compressing distal end sections; at least one of the intermediate sections being depressed below a nominal plane defined by an exterior surface of the associated distal end section; internal surfaces of the intermediate sections contacting against each other within apertures in the workpiece sheets; and the clinch joint being located within the intermediate sections.

The clip may further comprise a trapping section trapping the workpiece sheets between the apertures and the peripheral edges of the workpiece sheets, the trapping section being located between the intermediate sections and the junction.

The clip may further comprise an overhanging section of the clip being configured to protrude beyond the peripheral edges of the workpiece sheets, and the overhanging segment including an outboard structure of: (a) a mostly circular ring, (b) a hook, (c) an internally threaded hut, or (d) an elongated fastener projecting from an outer face thereof having an externally threaded shaft, with the outboard structure being outboard of the peripheral edges of the workpiece sheets.

The workpiece sheets may further comprise door window mullions, the mullions including side walls, and at least one of the mullions including a flange, the clip clinching the flange of one of the mullions to a sidewall of another of the mullions.

One of the legs may have a pre-drilled or pre-punched hole therein through which the clinch joint is formed.

The workpiece sheets may be at least part of a vehicular battery housing.

At least one of the legs of the clip may include teeth configured to pierce through a workpiece coating and create an electrically conductive interconnection with at least one of the workpiece sheets.

The junction may include a straight wall snugly fitting against the peripheral edges of the workpiece sheets; and one of the legs may be offset angled from the other of the legs during insertion of the clip onto the workpiece sheets and prior to creation of the clinch joint fastening together the legs.

According to another aspect, the present invention is directed to a clinching apparatus. The clinching apparatus comprises a clip including a generally U-shaped portion comprising a bifurcated leg segments, the clip being configured to receive at least one workpiece sandwiched between the leg segments. The clinching apparatus further comprises a clinch joint created by a deformed intermediate section of a first of the leg segments interlocking with an intermediate section of a second of the leg segments.

The apparatus may further comprise a die including an anvil contacting against the intermediate section of the second of the leg segments; and a punch contacting against the intermediate section of the first of the leg segments when deforming the clip to create the clinch joint.

The clip may further comprise a generally U-shaped portions connected to the leg segments by a bridging segment; the leg segments being generally flat and parallel; the leg segments being connected by a junction segment; the U-shaped portions being spaced apart from each other; and each of the U-shaped portions having a workpiece access slot.

The at least one workpiece may further comprise door window mullions, the mullions including side walls, and at least one of the mullions including a flange, the clip clinching the flange of one of the mullions to a sidewall of another of the mullions.

One of the leg segments may have a pre-drilled or pre-punched hole therein through which the clinch joint is formed.

The clip may be clinched adjacent to a corner of the at least one workpiece and a flange access slot of the clip diagonally faces toward the corner.

The apparatus may further comprise a threaded fastener attached to the clip between a junction segment and the clinch joint, the junction segment connecting the legs together.

The apparatus may further comprise a hem on the at least one workpiece, which includes multiple overlapping workpieces, and a junction segment of the clip has an internal surface enlarged greater than an access slot between the leg segments to receive the hem within the internal surface.

The clip may further include an enlarged ring at the junction segment configured to receive an elongated wire, line or conduit therethrough.

The clip may further include a hook extending from one of the leg segments, and an opening in the hook facing an opposite direction from a workpiece access slot between the leg segments.

At least one of the intermediate sections may be depressed below a nominal plane defined by an exterior surface of the associated leg segment where it clamps against the at least one workpiece, and internal surfaces of the intermediate sections contacting against each other within an aperture in the at least one workpiece.

The clip may further comprise trapping sections trapping the workpiece sheets between the aperture and a peripheral edge of the at least one workpiece, the trapping section being between the clinch joint and a junction segment.

At least one of the leg segments of the clip may include teeth configured to pierce through a coating and create an electrically conductive interconnection with the at least one workpiece.

At least one of the leg segments may have an outward offset angle relative to the other of the leg segments prior to creation of the clinch joint, to provide a lead-in angle when the clip is slid onto a peripheral edge of the at least one workpiece.

According to another aspect, the present invention is directed to a method of joining workpieces together. The method comprising: (a) overlapping multiple workpiece sheets; (b) placing edges of the workpiece sheets into an access slot within a bifurcated metallic clip so the clip sandwiches the workpiece sheets therebetween; (c) advancing a punch toward a die; (d) longitudinally pushing a punch-side portion of the clip into a die-side portion of the clip; (e) laterally expanding at least one of the workpiece sheets and/or the punch-side portion of the clip, to create an interlocking joint without a rivet.

The method may further comprise creating a hole in the die-side portion of the clip prior to placing the edges into the access slot, and the punch pushing at least one of: the clip portion and the workpiece sheets, through the hole in the clip.

The method may further comprise clinching the interlocking joint between the punch and the die, wherein the clip is thicker than at least one of the workpiece sheets.

The method may further comprise clinching the interlocking joint between the punch and the die, wherein the clip is more ductile than at least one of the workpiece sheets.

The method may further comprise clinching the interlocking joint at depressed intermediate sections of the clip, the intermediate sections being located between: (a) a junction connecting the leg segments and (b) spaced apart distal leg sections which sandwich the workpiece sheets; and contacting internal and facing surfaces of the intermediate sections against each other, within an aperture in the workpiece sheets, while performing the clinching.

The method may further comprise clinching together window mullions with the clip.

The present apparatus and method are advantageous over traditional devices. For example, the present clip improves the deformation, peel strength and durability of a clinch joint between very thin or brittle workpiece sheets. In order to form a clinch joint in thin, brittle, or non-ductile sheet metal workpieces that were traditionally riveted, screwed, bolted or welded together, the present clip beneficially locally reinforces the joint while still using the thin, brittle or non-ductile workpieces. The present apparatus and method also advantageously create a strong joint in coated workpiece sheets, in thin-to-thin materials, in thin-to-thick materials, in non-ductile materials, in composite polymer/metal materials, in ceramic materials, in foils and the like. Moreover, the present clip, punch and die tooling, and clinching steps synergistically create an electrically conductive joint in coated (e.g., pre-painted, galvanized or plated) workpiece sheets by removing at least some of the coating during the clinching operation, without the need for extra operations. Additional advantages and features of the present apparatus and method can be ascertained from the following description and appended claims, taken in conjunction with the accompanying drawings.

### BRIEF DESCRIPTION OF THE DRAWINGS

Figure 1 is a partially exploded perspective view showing first, second and third embodiments of a clinching clip of the present apparatus;
Figure 2 is a perspective view showing the first embodiment clinching clip apparatus;
Figure 3 is a perspective view showing the second embodiment clinching clip apparatus;
Figure 4 is an elevation view showing a garage door and window mullion apparatus;
Figure 5 is an exploded perspective view showing the window mullion apparatus of Figure 4, including a fourth embodiment clinching clip;
Figure 6 is an assembled perspective view showing the window mullion apparatus of Figure 5;
Figure 7 is a partly fragmented perspective view showing an apparatus including punches and dies used to fasten the fourth embodiment clinching clip to the window mullion apparatus of Figure 6;
Figure 8 is an enlarged perspective view showing the window mullion apparatus of Figure 6;
Figure 9 is a perspective view showing either of the first and second embodiment clinching clips and a T-shaped workpiece apparatus;
Figure 10 is a perspective view showing either of the first and second embodiment clinching clips and a T-shaped workpiece apparatus;
Figure 11 is a perspective view showing a fifth embodiment clinching clip and a corner workpiece apparatus;
Figure 12 is a perspective view showing a sixth embodiment clinching clip and a corner workpiece apparatus;
Figure 13 is a perspective view showing a seventh embodiment clinching clip fastened to a corner workpiece apparatus;
Figure 14 is a perspective view showing an eighth embodiment clinching clip and an opposed L-shaped workpiece apparatus;
Figure 15 is a perspective view showing a ninth embodiment clinching clip and a hemmed workpiece apparatus;
Figure 16 is a perspective view showing a tenth embodiment clinching clip, retained wires or conduits, and a T-shaped workpiece apparatus;
Figure 17 is a perspective view showing an eleventh embodiment clinching clip and a U-shaped workpiece apparatus;
Figure 18 is a perspective view showing a twelfth embodiment clinching clip fastened to a corner workpiece apparatus;
Figure 19 is a perspective view showing a thirteenth embodiment clinching clip fastened to a corner workpiece apparatus;
Figure 20 is a perspective view showing an apparatus including a punch and a die used to clinch the first or second embodiment clinching clips to the workpiece of Figure 9, in a retracted position;
Figure 21 is a cross-sectional view taken along line 21-21 of Figure 20, in the retracted position;
Figure 22 is a perspective view showing the apparatus of Figure 20, in an advanced position;
Figure 23 is a perspective view showing the apparatus of Figure 22, in the retracted position;
Figure 24 is a cross-sectional view taken along line 21-21 of Figure 20, in a workpiece-clamping position;
Figures 25A-D are a series of cross-sectional views showing formation of a clinch joint in the second embodiment clinching clip and workpiece apparatus;
Figure 26 is a cross-sectional view showing a clinch joint in one configuration of the second embodiment clinching clip and workpiece apparatus;
Figure 27 is a cross-sectional view showing a clinch joint in another configuration of the second embodiment clinching clip and workpiece apparatus;
Figures 28A and 28B are cross-sectional views showing before and after formation of a clinch joint of the second embodiment clinching clip and workpiece apparatus;
Figure 29 is a cross-sectional view showing a clinch joint removing a coating in a variation of the clinching clip and workpiece apparatus;
Figures 30A and 30B are cross-sectional views showing before and after formation of a clinch joint of the first embodiment clinching clip and workpiece apparatus;
Figures 31A and 31B are cross-sectional views showing before and after formation of a clinch joint in a further configuration of the second embodiment clinching clip and workpiece apparatus;
Figure 32A is an exploded elevation view showing a fourteenth embodiment clinching clip and workpiece apparatus;
Figure 32B is a perspective view showing the fourteenth embodiment clinching clip;
Figure 32C is a perspective view showing the fourteenth embodiment clinching clip and workpiece apparatus, in an assembled position;
Figure 32D is a cross-sectional view, taken along line 32D-32D from Figure 32C, showing the fourteenth embodiment clinching clip and workpiece apparatus, in the assembled position;
Figure 33A is an exploded elevation view showing a fifteenth embodiment clinching clip and workpiece apparatus;
Figure 33B is a perspective view showing the fifteenth embodiment clinching clip;
Figure 33C is a perspective view showing the fifteenth embodiment clinching clip and workpiece apparatus, in an assembled position;
Figure 33D is a cross-sectional view, taken along line 33D-33D from Figure 33C, showing the fifteenth embodiment clinching clip and workpiece apparatus, in the assembled position;
Figure 34A is an exploded elevation view showing a sixteenth embodiment clinching clip and workpiece apparatus;
Figure 34B is a perspective view showing the sixteenth embodiment clinching clip;
Figure 34C is a perspective view showing the sixteenth embodiment clinching clip and workpiece apparatus, in an assembled position;
Figure 34D is a cross-sectional view, taken along line 34D-34D from Figure 34C, showing the sixteenth embodiment clinching clip and workpiece apparatus, in the assembled position;
Figure 35A is an exploded elevation view showing a seventeenth embodiment clinching clip and workpiece apparatus;
Figure 35B is a perspective view showing the seventeenth embodiment clinching clip;
Figure 35C is a perspective view showing the seventeenth embodiment clinching clip and workpiece apparatus, in an assembled position;
Figure 35D is a cross-sectional view, taken along line 35D-35D from Figure 35C, showing the seventeenth embodiment clinching clip and workpiece apparatus, in the assembled position;
Figure 36A is an exploded elevation view showing a eighteenth embodiment clinching clip and workpiece apparatus;
Figure 36B is a perspective view showing the eighteenth embodiment clinching clip;
Figure 36C is a perspective view showing the eighteenth embodiment clinching clip and workpiece apparatus, in an assembled position;
Figure 36D is a cross-sectional view, taken along line 36D-36D from Figure 36C, showing the eighteenth embodiment clinching clip and workpiece apparatus, in the assembled position;
Figure 37A is an exploded elevation view showing a nineteenth embodiment clinching clip and workpiece apparatus;
Figure 37B is a perspective view showing the nineteenth embodiment clinching clip;
Figure 37C is a perspective view showing the nineteenth embodiment clinching clip and workpiece apparatus, in an assembled position;
Figure 37D is a cross-sectional view, taken along line 37D-37D from Figure 37C, showing the nineteenth embodiment clinching clip and workpiece apparatus, in the assembled position;
Figure 38A is an exploded elevation view showing a twentieth embodiment clinching clip and workpiece apparatus;
Figure 38B is a perspective view showing the twentieth embodiment clinching clip;
Figure 38C is a perspective view showing the twentieth embodiment clinching clip and workpiece apparatus, in an assembled position;
Figure 38D is a cross-sectional view, taken along line 38D-38D from Figure 38C, showing the twentieth embodiment clinching clip and workpiece apparatus, in the assembled position;
Figure 39A is an exploded elevation view showing a twenty-first embodiment clinching clip and workpiece apparatus;
Figure 39B is a perspective view showing the twenty-first embodiment clinching clip;
Figure 39C is a perspective view showing the twenty-first embodiment clinching clip and workpiece apparatus, in an assembled position;
Figure 39D is a cross-sectional view, taken along line 39D-39D from Figure 39C, showing the twenty-first embodiment clinching clip and workpiece apparatus, in the assembled position;
Figure 40A is an exploded elevation view showing a twenty-second embodiment clinching clip and workpiece apparatus;
Figure 40B is a perspective view showing the twenty-second embodiment clinching clip;
Figure 40C is a perspective view showing the twenty-second embodiment clinching clip and workpiece apparatus, in an assembled position;
Figure 40D is a cross-sectional view, taken along line 40D-40D from Figure 40C, showing the twenty-second embodiment clinching clip and workpiece apparatus, in the assembled position;
Figure 41A is an exploded elevation view showing a twenty-third embodiment clinching clip and workpiece apparatus;
Figure 41B is a perspective view showing the twenty-third embodiment clinching clip;
Figure 41C is a perspective view showing the twenty-third embodiment clinching clip and workpiece apparatus, in an assembled position;
Figure 41D is a cross-sectional view, taken along line 41D-41D from Figure 41C, showing the twenty-third embodiment clinching clip and workpiece apparatus, in the assembled position;
Figure 42A is an exploded elevation view showing a twenty-fourth embodiment clinching clip and workpiece apparatus;
Figure 42B is a perspective view showing the twenty-fourth embodiment clinching clip;
Figure 42C is a perspective view showing the twenty-fourth embodiment clinching clip and workpiece apparatus, in an assembled position;
Figure 42D is a cross-sectional view, taken along line 42D-42D from Figure 42C, showing the twenty-fourth embodiment clinching clip and workpiece apparatus, in the assembled position;
Figure 43A is an exploded elevation view showing a twenty-fifth embodiment clinching clip and workpiece apparatus;
Figure 43B is a perspective view showing the twenty-fifth embodiment clinching clip;
Figure 43C is a perspective view showing the twenty-fifth embodiment clinching clip and workpiece apparatus, in an assembled position;
Figure 43D is a cross-sectional view, taken along line 43D-43D from Figure 43C, showing the twenty-fifth embodiment clinching clip and workpiece apparatus, in the assembled position;
Figure 44A is an exploded elevation view showing a twenty-sixth embodiment clinching clip and workpiece apparatus;
Figure 44B is a perspective view showing the twenty-sixth embodiment clinching clip;
Figure 44C is a perspective view showing the twenty-sixth embodiment clinching clip and workpiece apparatus, in an assembled position;
Figure 44D is a cross-sectional view, taken along line 44D-44D from Figure 44C, showing the twenty-sixth embodiment clinching clip and workpiece apparatus, in the assembled position;
Figure 45A is an exploded elevation view showing a twenty-seventh embodiment clinching clip and workpiece apparatus;
Figure 45B is a perspective view showing the twenty-seventh embodiment clinching clip;
Figure 45C is a perspective view showing the twenty-seventh embodiment clinching clip and workpiece apparatus, in an assembled position;
Figure 45D is a cross-sectional view, taken along line 45D-45D from Figure 45C, showing the twenty-seventh embodiment clinching clip and workpiece apparatus, in the assembled position;
Figure 46A is an exploded elevation view showing a twenty-eighth embodiment clinching clip and workpiece apparatus;
Figure 46B is a perspective view showing the twenty-eighth embodiment clinching clip;
Figure 46C is a perspective view showing the twenty-eighth embodiment clinching clip and workpiece apparatus, in an assembled position;
Figure 46D is a cross-sectional view, taken along line 46D-46D from Figure 46C, showing the twenty-eighth embodiment clinching clip and workpiece apparatus, in the assembled position;
Figure 47A is an exploded elevation view showing a twenty-ninth embodiment clinching clip and workpiece apparatus;
Figure 47B is a perspective view showing the twenty-ninth embodiment clinching clip;
Figure 47C is a perspective view showing the twenty-ninth embodiment clinching clip and workpiece apparatus, in an assembled position;
Figure 47D is a cross-sectional view, taken along line 47D-47D from Figure 47C, showing the twenty-ninth embodiment clinching clip and workpiece apparatus, in the assembled position;
Figure 48A is an exploded elevation view showing a thirtieth embodiment clinching clip and workpiece apparatus;
Figure 48B is a perspective view showing the thirtieth embodiment clinching clip;
Figure 48C is a perspective view showing the thirtieth embodiment clinching clip and workpiece apparatus, in an assembled position;
Figure 48D is a cross-sectional view, taken along line 48D-48D from Figure 48C, showing the thirtieth embodiment clinching clip and workpiece apparatus, in the assembled position;
Figure 49A is an exploded elevation view showing a thirty-first embodiment clinching clip and workpiece apparatus;
Figure 49B is a perspective view showing the thirty-first embodiment clinching clip;
Figure 49C is a perspective view showing the thirty-first embodiment clinching clip and workpiece apparatus, in an assembled position;
Figure 49D is a cross-sectional view, taken along line 49D-49D from Figure 49C, showing the thirty-first embodiment clinching clip and workpiece apparatus, in the assembled position;
Figure 50A is an exploded elevation view showing a thirty-second embodiment clinching clip and workpiece apparatus;
Figure 50B is a perspective view showing the thirty-second embodiment clinching clip;
Figure 50C is a perspective view showing the thirty-second embodiment clinching clip and workpiece apparatus, in an assembled position;
Figure 50D is a cross-sectional view, taken along line 50D-50D from Figure 50C, showing the thirty-second embodiment clinching clip and workpiece apparatus, in the assembled position;
Figure 51A is an exploded elevation view showing a thirty-third embodiment clinching clip and workpiece apparatus;
Figure 51B is a perspective view showing the thirty-third embodiment clinching clip;
Figure 51C is a perspective view showing the thirty-third embodiment clinching clip and workpiece apparatus, in an assembled position;
Figure 51D is a cross-sectional view, taken along line 51D-51D from Figure 51C, showing the thirty-third embodiment clinching clip and workpiece apparatus, in the assembled position;
Figure 52A is an exploded elevation view showing a thirty-fourth embodiment clinching clip and workpiece apparatus;
Figure 52B is a perspective view showing the thirty-fourth embodiment clinching clip;
Figure 52C is a perspective view showing the thirty-fourth embodiment clinching clip and workpiece apparatus, in an assembled position;
Figure 52D is a cross-sectional view, taken along line 52D-52D from Figure 52C, showing the thirty-fourth embodiment clinching clip and workpiece apparatus, in the assembled position;
Figure 53A is an exploded elevation view showing a thirty-fifth embodiment clinching clip and workpiece apparatus;
Figure 53B is a perspective view showing the thirty-fifth embodiment clinching clip;
Figure 53C is a perspective view showing the thirty-fifth embodiment clinching clip and workpiece apparatus, in an assembled position;
Figure 53D is a cross-sectional view, taken along line 53D-53D from Figure 53C, showing the thirty-fifth embodiment clinching clip and workpiece apparatus, in the assembled position;
Figure 54A is an exploded elevation view showing a thirty-sixth embodiment clinching clip and workpiece apparatus;
Figure 54B is a perspective view showing the thirty-sixth embodiment clinching clip;
Figure 54C is a perspective view showing the thirty-sixth embodiment clinching clip and workpiece apparatus, in an assembled position; and
Figure 54D is a cross-sectional view, taken along line 54D-54D from Figure 54C, showing the thirty-sixth embodiment clinching clip and workpiece apparatus, in the assembled position.

### DETAILED DESCRIPTION

A clinching clip apparatus, also known as a reinforcement clip or bracket, is clinched to a workpiece. The clinching or reinforcement clip is fastened onto one or more workpiece sheets by a movable punch and a die on an opposite side of the sheets acting to create a deformable and interlocking clinch joint between overlapping legs of the clip and/or one or more of the workpiece sheets between the legs. The clip has spaced apart segments which sandwich at least one workpiece sheet panel therebetween, with the clip leg segments each being thicker than at least one of the workpiece sheet panel(s) in at least some of the embodiments herein. Furthermore, for all of the configurations herein, the clip has a lateral width dimension at least ten times greater than a thickness dimension of each of the legs. At least one of the workpiece sheets may be thin metal, brittle metal, non-ductile metal, polymeric, ceramic, a foil, and/or have a coated layer thereon (such as painted, galvanized, e-coated, anodized or the like), by way of nonlimiting examples.

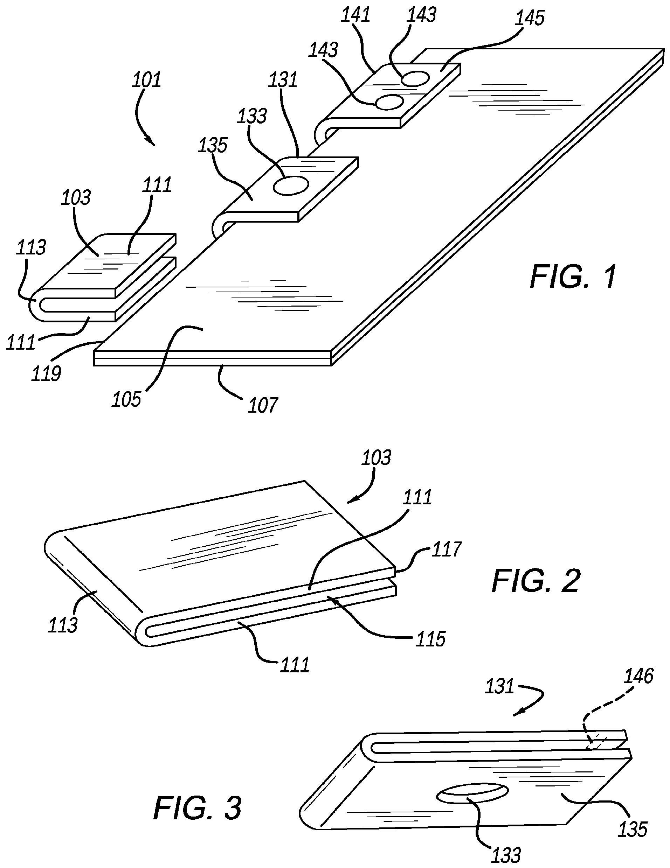

More specifically, exemplary embodiments of a clinching clip and fastening apparatus 101 are illustrated in Figures 1-3. Referring to Figures 1 and 2, a first embodiment of apparatus 101 includes a clinching clip 103 and multiple workpiece sheets 105 and 107. Clinching clip 103 has a pair of spaced apart and generally parallel leg segments 111 extending from a junction segment 113. The bifurcated and generally flat, leg segments 111 and curved junction segment 113 define a generally C-shape with an open slot 115 between end edges 117. Inner and outer surfaces of this version of clip 103 are continuous, without holes or the like therein. After the workpiece sheets 105 and 107 are aligned with each other, a user manually or a robotic slide automatically, pushes and slides slot 115 of clip 103 onto leading edges 119 of the workpiece sheets. Thus, the inner surface of junction segment 113 abuts against leading edges 119 and leg segments 111 snuggly sandwich workpiece sheets 105 and 107 therebetween.

A second exemplary clinching clip 131 (also shown in Figure 3) is the same as the first embodiment, however, this version additionally has a pre-pierced or pre-drilled through-hole 133 in a bottom leg segment 135 thereof. A third exemplary clinching clip 141 is the same as the first embodiment, however, this version additionally has at least two pre-pierced or pre-drilled through-holes 143 in a bottom leg segment 145 thereof. An alternate configuration of clips 103, 131 and/or 141 may optionally include at least one barb 146 inwardly projecting from the inner surface of the leg segment(s). Such a barb serves to temporarily retain the clip to the workpiece sheets until the clinching operation is later performed. Also, there may be more than two workpiece sheets sandwiched between the clip legs.

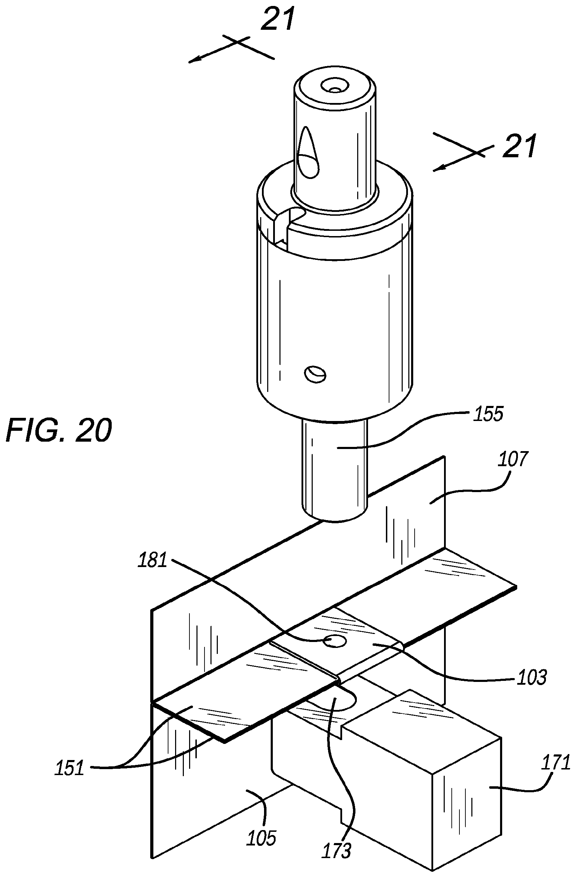

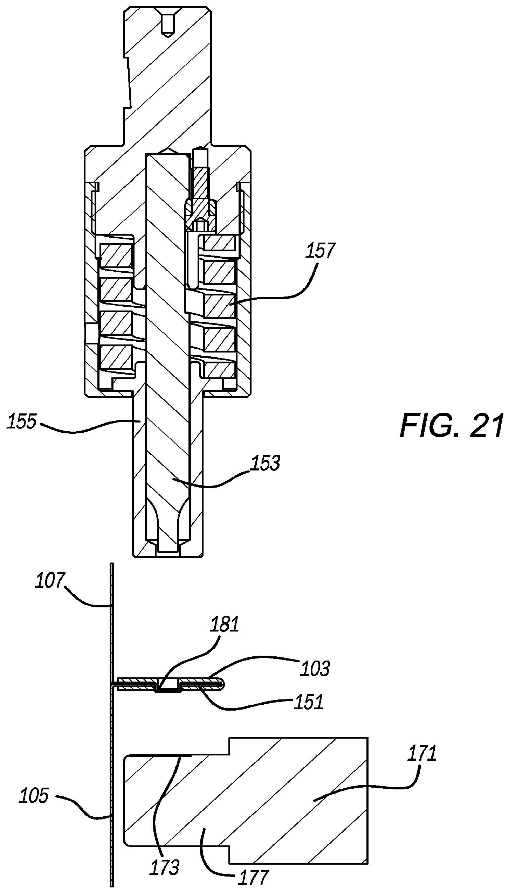

Figures 2, 9, 20-24, 30A and 30B illustrate the first embodiment of clip 111 clinched onto offset angled flange sections 151 of workpiece sheets 105 and 107. After the clip has been initially slid onto the flange sections (or vice versa), a pneumatically or hydraulically fluid-powered actuator, or an electric motor actuator and ball-and-screw transmission, linearly advances and retracts a longitudinally elongated punch 153 toward and away from the workpiece flange sections 151. An outer clamping stripper 155 concentrically surrounding punch 153 and a surrounding helically coiled spring 157 longitudinally bias the stripper toward the workpiece flange sections. A distal and workpiece-engaging end of punch 153 preferably has an end view round shape, but may alternately have an oval, polygonal, star or other shape.

A die assembly 171 preferably has a generally flat and workpiece-contacting anvil surface 173 facing the distal end of punch 153. Anvil surface 173 may optionally be located within a depression in a die body 177. In the presently illustrated configuration, the die assembly does not have any moving parts that contact against the workpiece sheets. However, the punch assembly and die assembly may be robotically and automatically moved to locations aligned with the workpieces, or vice versa.

Alternately, the die assembly may include a stationary and circular, raised anvil bordered by at least two movable die blades on opposite lateral sides thereof. In this exemplary configuration, workpiece-contacting distal ends of the die blades longitudinally project past a workpiece-contacting surface of the anvil. An elastomeric and flexible biasing ring, or canted coiled spring laterally surrounds the die blades and urges them toward the anvil.

With either of the preceding die assembly configurations, an unpierced, clinch joint 181 interlocks together the clinch clip 103 in addition to the overlapping workpieces 105 and 107 sandwiched therebetween. The punch and die interaction deform leg segments 111 of clip 103 and also the workpieces therein to create a generally circular expanded button located closest to the anvil and a depressed cup shape on the punch side. Therefore, the deformed leg segments 111 of the clip are the exterior surfaces of the clinch joint depressed cup and the opposite chinch joint projecting button. This shape of clinch joint is preferably leak-proof, deters workpiece-to-workpiece rotation, and does not employ a separate fastener such as a rivet.

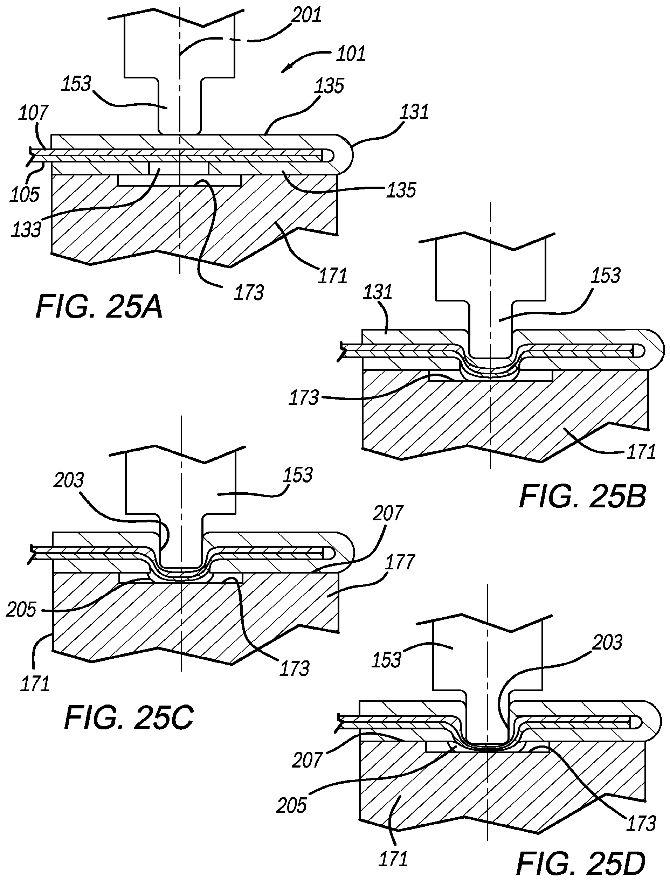

Forming of a clinch joint with the second embodiment clip 131 will now be described with reference to Figures 1, 3, 25A-D and 26. Punch 153 linearly advances to first deform and push the punch-facing leg segment 135 of clip 131, and then the adjacent areas of workpiece sheets 107 and 105, in a primarily longitudinal direction 201 into hole 133 of the die-facing leg segment 135 of the clip to create a cup portion 203 of the clinch joint. Punch 153 and die assembly 171 thereafter deform and laterally expand an interlocking button portion 205 between die-facing leg segment 135 and the spaced apart anvil 173. Upper shoulders 207 of die body 177 buttress against areas of clip 131 on either lateral side of hole 133 during formation of the clinch joint. In this construction, the more ductile and/or thicker clip 131 acts as the primary deformed and interlocking connection between the sandwiched workpiece sheets 105 and 107.

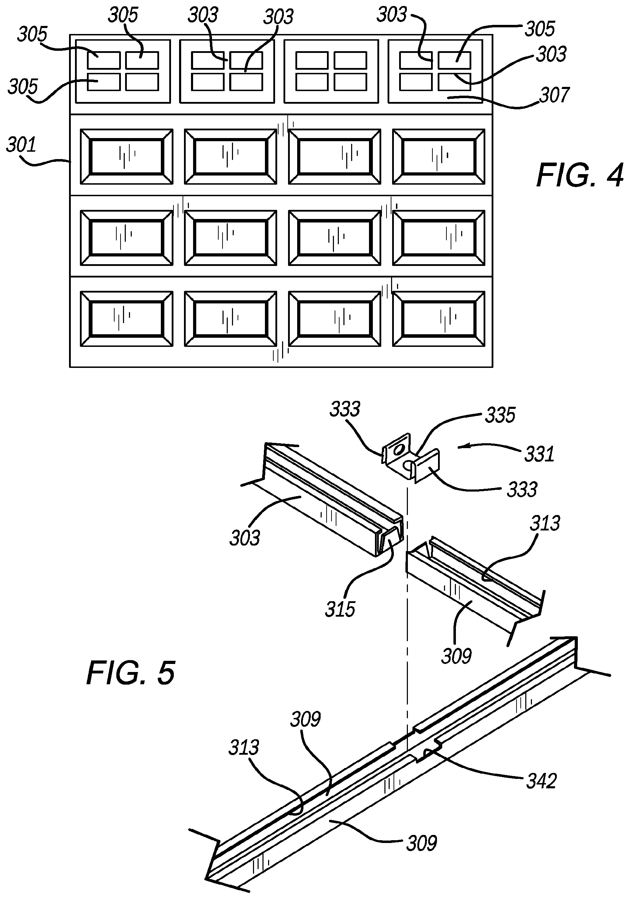

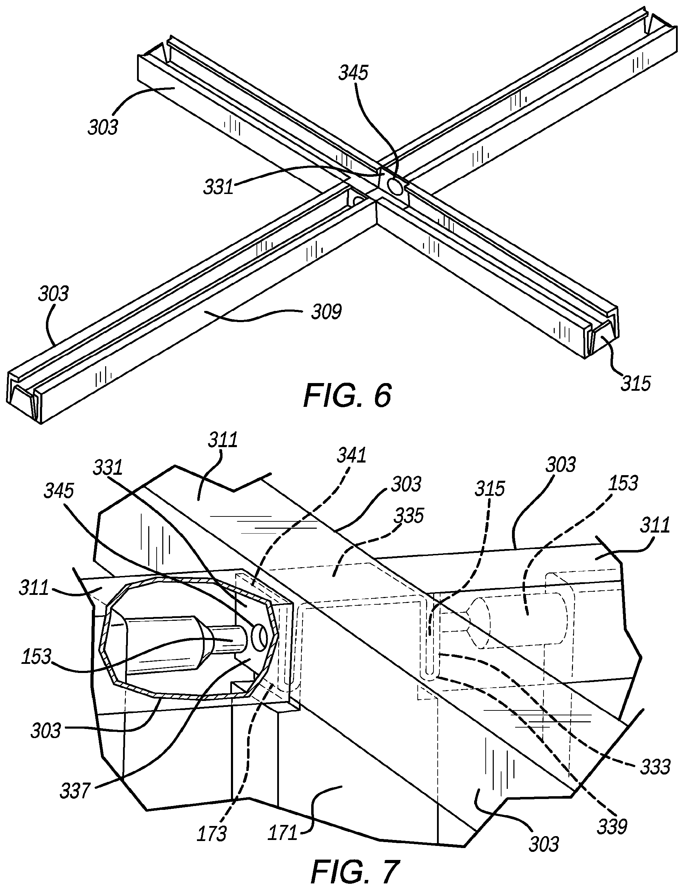

Figures 4-8 show a movable garage door assembly 301 using any of the present clip embodiments. Garage door assembly 301 includes multiple metal sheets that are preferably clinched, or alternately, riveted and/or adhesively bonded together. Elongated metallic mullions 303 hold windows 305 to frames 307, which are fastened to the garage door assembly. Each mullion 303 includes side walls 309 upstanding from a base wall 311, inwardly turned fingers 313 from each side wall defining facing edges, and flanges 315 upwardly projecting at opposite ends of the base wall.

A clinching clip 331 has a generally M- or W-shape (depending on orientation) including a pair of substantially U-shaped sections 333 connected by a generally flat bridging segment 335. Each U-shaped section 333 includes a pair of generally flat and parallel leg segments 337 joined by a curved end segment 339. A workpiece receiving slot is positioned between a distal edge 341 of a leg segment and the spaced apart but adjacent bridging segment 335.

First, mullions 303 are positioned in a crossing orientation with flanges 315 of a coaxially aligned pair of the mullions located against opposite sidewalls 309 of a continuous of the mullions. Furthermore, flanges 315 of the coaxially aligned pair are adjacent to a cutout portion 342 where edges of the sidewalls are present without the finger 313. Second, clip 331 is manually or automatically slid over the cutout portions of side walls 309 and the adjacent flanges 315 so as to temporarily hold the mullions in a crossing + like orientation. Thus, the pair of U-sections 333 sandwich the workpiece side walls and flanges therebetween. Third, actuators automatically advance punches 153 toward each U-section 333 of clip 331. Fourth, the punches deform and push the clip leg segments 337, flanges 315 and side walls 309 toward die 171. The die is located in an area between the U-sections 333 and bridging segment 335. Fifth, the punches and anvils 173 of the die assembly create a clinch joint 345 between the clip 331 and crossed mullions 303. Sixth, the fastened mullions are then removed from the punches and die, or vice versa. Seventh, the mullions are connected to the windows and the mullion/window assemblies are connected to the garage door assembly.

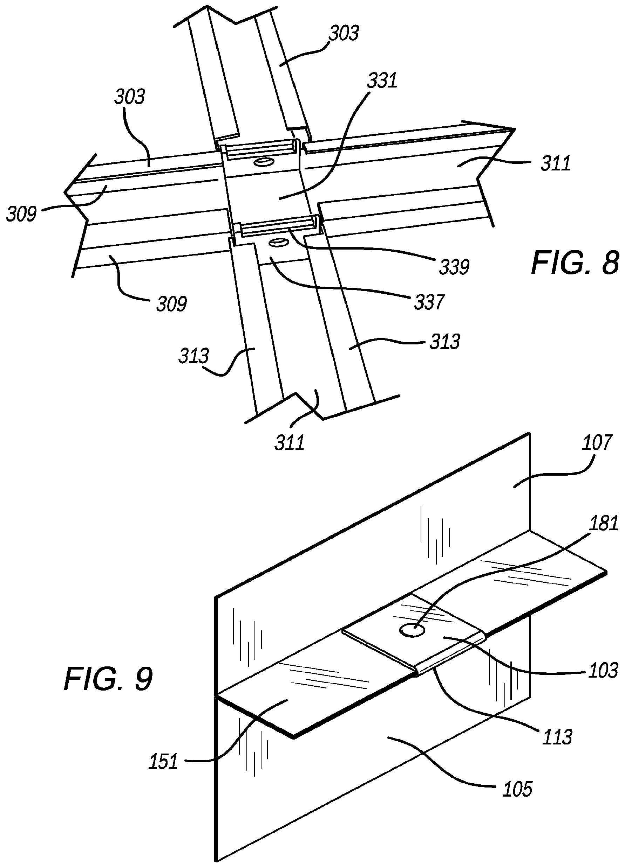

Figure 9 illustrates any of the clinching clips, such as exemplary clip 103, inserted onto a pair of overlapping workpiece flanges 151, with the access slot of the clip pointing generally perpendicularly toward the primary and non-overlapping workpiece surfaces 105 and 107. In this orientation, the curved junction segment 113 provides an additional anti-peel connection (in other words, to inhibit peeling apart of the joined flanges 151 in addition to clinch joint 181), and is well suited for punch and die clinching access to a middle joint 181 inwardly spaced between lateral edges of the flanges.

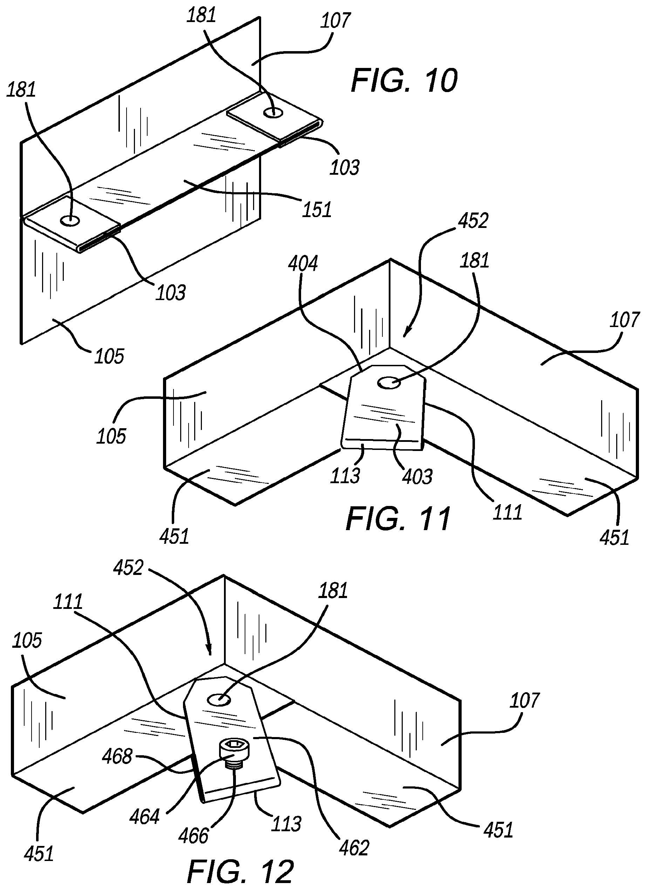

Figure 10 shows any of the clinching clips, such as exemplary clip 103, inserted onto workpiece flanges 151. The access slot of each of the clips is pointing generally offset angled relative to the primary and non-overlapping workpiece surfaces 105 and 107, and with the access slots pointing toward each other with the overlapping workpiece flanges 151 therebetween. In this orientation, the curved junction segment 113 provides an additional anti-peel connection (in other words, inhibiting peeling apart of the joined flanges 151 in addition to clinch joint 181) and an anti-rotation feature (in other words, deterring clip rotation relative to the flanges 151), and is well suited for punch and die clinching access to joints 181 adjacent to lateral and outboard edges of the flanges.

Referring to a fifth embodiment of Figure 11, any of the clinching clips, but here, preferably a clinching clip 403 having chamfered distal corners 404, is inserted onto workpiece flanges 451 at a corner intersection 452 of workpieces 105 and 107. The access slot of clip 403 is pointing generally perpendicularly toward the primary and non-overlapping workpiece surfaces 105 and 107, and pointing in a generally diagonal direction to workpiece corner 452. In this orientation, curved junction segment 113 provides an additional anti-peel connection (in other words, inhibiting peeling apart of the joined flanges 451 in addition to clinch joint 181), and is well suited for punch and die clinching access to a clinch joint 181 at the overlapping end segment of flanges 451 which are adjacent to the corner. The placement of clinch joint 181 and the width of clip 113 at junction 113 diagonally contacting its side edges against the flange edges, inhibits inward rotation of workpieces 105 and 107 relative to each other while the clinch joint 113 secures the flanges together. The leg width of clip 403 adjacent junction 113 is at least ten times greater than a thickness dimension of each leg 111, and more preferably at least twenty times greater, which is applicable to all of the clip embodiments discussed herein.

A sixth embodiment of a clinching clip 462 shown in Figure 12 is similar to that of Figure 11. This clip 462 is inserted onto workpiece flanges 451 at a corner intersection 452 of workpieces 105 and 107, with the access slot of the clip pointing generally perpendicularly toward the primary and non-overlapping workpiece surfaces 105 and 107, and pointing in a generally diagonal direction to workpiece corner 452. However, the Figure 12 clip additionally includes an optional tapped threaded fastener 464 received within an aperture 466 in an overhanging and elongated accessory section 468 of a clinched leg segment 111, between a clinch joint 181 and a curved junction segment 113. Overhanging section 468 projects past the internal edges of flanges 451 such that an inside surface of junction 113 is spaced away from the internal flange edges by at least 10 mm. Threaded fastener 464 is preferably only connected to and projecting from one, and not both, of the bifurcated leg segments 111. Preferably, threaded fastener 464 is a removable screw or bolt with a threaded shaft and an enlarged head. An optional accessory component, such as an eyelet for an electrical wire, may be attached to fastener 464. Thus, this version of clinching clip 462 synergistically serves to fasten together the brittle or thinner workpiece sheets while also acting as an electrical connector.

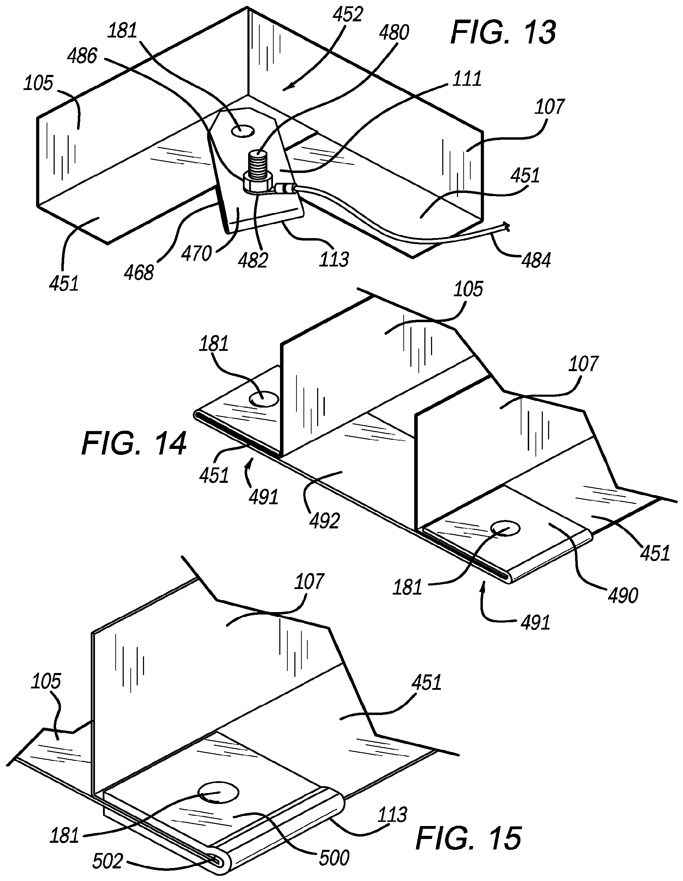

Referring now to Figure 13, a seventh configuration of a clinching clip 470 is similar to that of Figure 12. This clip 470 is inserted onto workpiece flanges 451 at a corner intersection 452 of workpieces 105 and 107, with the access slot of the clip pointing generally perpendicularly toward the primary and non-overlapping workpiece surfaces 105 and 107, and pointing in a generally diagonal direction to workpiece corner 452. Clip 470 also includes an optional weld-stud fastener 480 permanently secured to an overhanging and elongated accessory section 468 of a clinched leg segment 111, between a clinch joint 181 and a curved junction segment 113. Weld-stud fastener 480 is preferably only connected to and projecting from one, and not both, of the bifurcated leg segments 111. Preferably, the weld-stud fastener 480 has a threaded shaft and an optional flange adjacent to clip. An optional accessory component, such as an eyelet 482 for an electrical grounding wire 484, may be attached to weld-stud fastener via an internally threaded nut fastener 486. Weld-stud fastener 480 may be pre-attached, via arc, resistance, spot or friction welding, to clip 470 before the clip is slid and then clinched onto the flanges. Therefore, this version of clinching clip 470 synergistically serves to fasten together the brittle or thinner workpiece sheets while also acting as an electrical connector.

Figure 14 illustrates any of the clinching clips inserted onto oppositely facing workpiece flanges 451. Preferably, this eighth embodiment clinching clip 490 includes a pair of generally U-shaped sections 491 with access slots inwardly facing toward each other. A bridging segment 492 connects and spaces apart lower leg segments 111. Clinch joints 181 fasten together bifurcated leg segments 111 and one or more sandwiched workpiece sheets 105 and 107, for each U-shaped section, while bridging segment 492 acts as a spreader and serves to space apart the workpiece sheets 105 and 107 with a gap therebetween.

Referring to Figure 15, any of the clinching clips are inserted onto workpiece flanges 451 with the access slot of a ninth configuration of clinching clip 500 pointing generally perpendicularly toward at least one of the primary and non-overlapping workpiece surfaces 107. The primary surfaces of workpiece sheets 105 and 107 are offset angled, such as perpendicular to each other on the side opposite to the flange. In this orientation, an enlarged curved junction segment 113 provides additional internal room to receive a rolled hem 502 connection between workpiece flanges 451. Accordingly, clip is inserted onto flanges 451 by sliding clip 500 sideways onto the lateral flange edges, and this arrangement synergistically serves to retain the clip in position on the flange whereafter a clinch joint 181 is formed for permanent attachment together of the clip and workpieces. Clinch joint 181 is located between hem 502 and the primary workpiece surfaces 105 and 107.

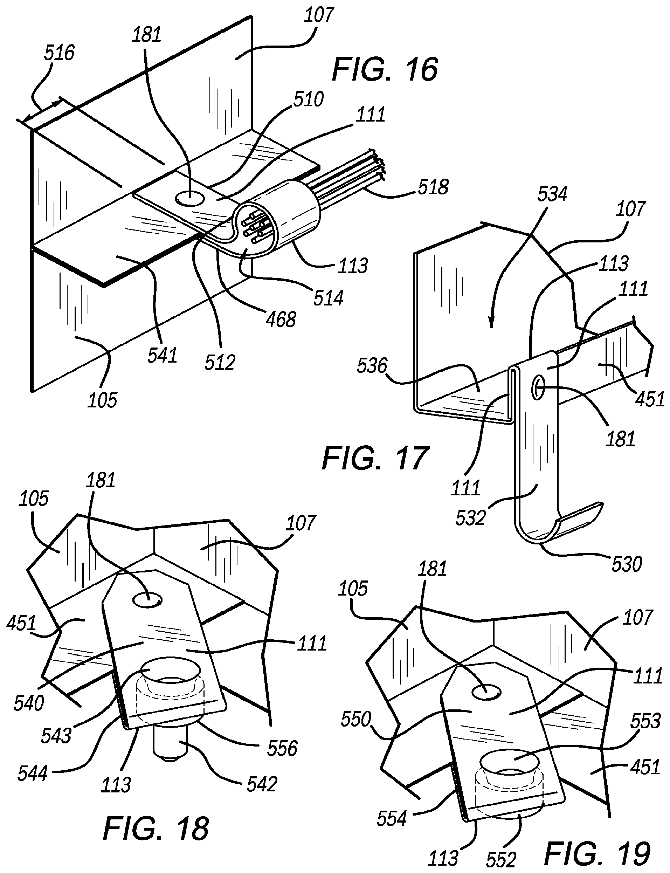

Figure 16 shows any of the clinching clips herein sandwiching overlapping flanges 451 of workpieces together. This clinching clip 510 includes an overhanging and elongated section 468 of leg segments 111, defining a loop or eyelet 512, which creates an enlarged internal passageway 514 adjacent to a curved junction segment 113. Internal passageway 514 has a round shape with a diameter greater than the combined thickness of leg segments 111, and more preferably greater than the button circumference of a clinch joint 181, and even more preferably greater than a lateral width dimension 516 of clip 510. Elongated members 518, such as electric wires, fiber optic lines, fluid carrying tubes or the like, are optionally held relative to the attached workpieces 105 and 107 within the internal passageway. Hence, passageway of clip 510 synergistically acts as a routing ring and standoff in addition to fastening together flanges 541 of workpieces 105 and 107.

Any of the present clinching clips may be used in the eleventh apparatus embodiment of Figure 17. A hook-like hanger 530 is disposed at a distal end of one of leg segments 111 of a clinching clip 532. A U-shaped section is at the opposite proximal end, defined by leg segments 111 and a curved connection and junction segment 113. A clinch joint 181 is created between the leg segments and an upturned flange 451 of at least one workpiece sheet 107. Optionally, a U-shaped trough 534 is created in the workpiece sheet by flange 451, a bottom wall 536 and a nominal primary workpiece surface. Hence, clip 532 serves as a hook for holding a removable strap, rope or other accessory, or acting as a grab handle for workpiece 107. Optionally, clip 532 may synergistically fasten together multiple workpieces by joint 181 while also offering a hook function. It is alternately envisioned that hook 530 may have different shapes, such as an L-shape, a mostly enclosed and hollow round loop shape, a tightly turned hem shape, more simply a straight leg-continuation shape, or the like.

Figures 18 and 19 show clinch clips and workpieces 105 and 107 like that of Figure 12. However, the twelfth embodiment clinching clip 540 of Figure 18 presents a press-in or interference-fit stud 542 projecting through an aperture 543 in an overhanging section 544 extending from leg segments 111; the stud may have external threads. While the clinching clip 550 shown in Figure 19 illustrates a press-in or interference-fit nut 552 projecting through an aperture 553 in an overhanging section 554 extending from leg segments 111; the nut may have internal threads. The stud or nut are located between a turned junction segment 113 and a clinch joint 181, and an optional annular collar 556 may be located within or aligned with but external to the aperture in the Figure 18 and/or 19 embodiments. Electrical connectors, such as eyelets or screws, or other accessories may be removably coupled to stud 542 and nut 552. Therefore, clips 540 and 550 synergistically serve to fasten together workpiece flanges 451 while also retaining a supplemental fastener spaced away from clinch joint 181 and flanges 451.

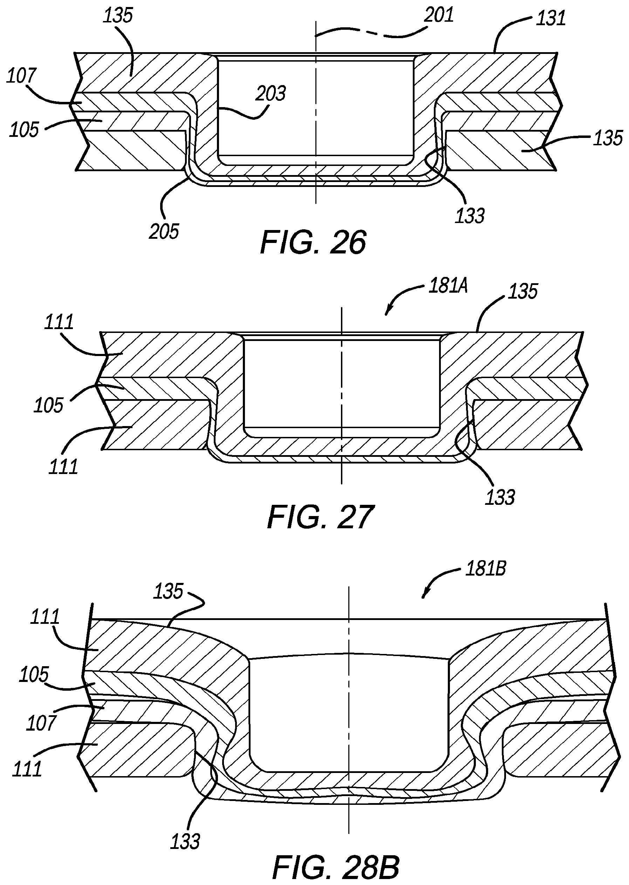

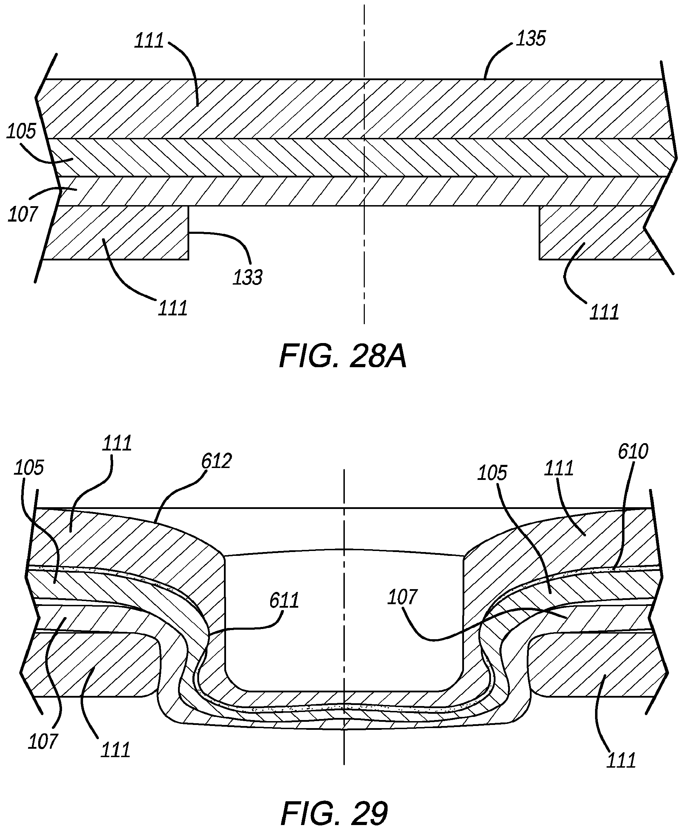

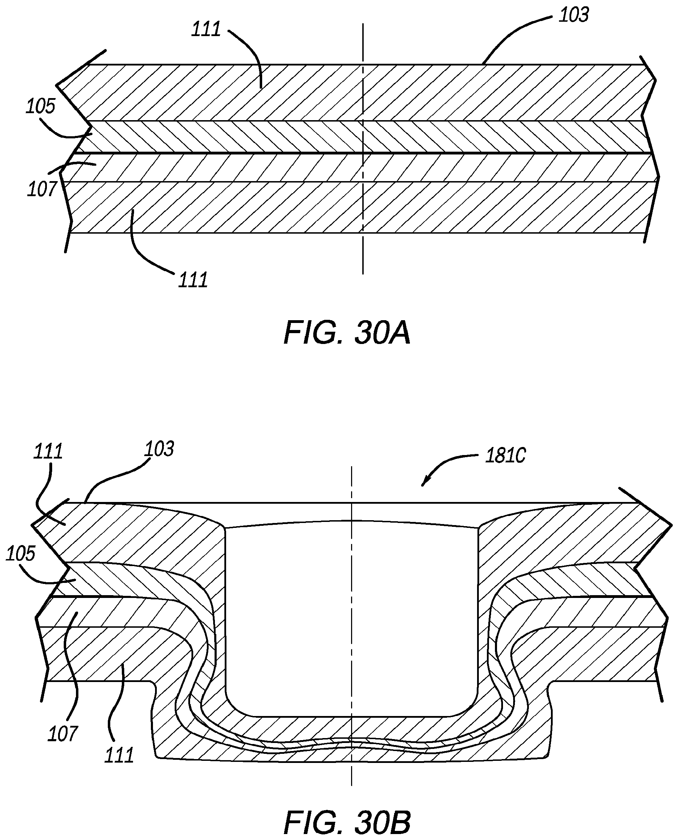

Figure 27 shows a clinch joint 181A, having the hole 133 of Figure 3, between leg segments 111 of clip 135 and the sandwiched single workpiece sheet 105. Figures 28A and 28B show a clinch joint 181B, having hole 133 of Figure 3, between leg segments 111 of clip 135 and the sandwiched two workpiece sheets 105 and 107; with 28A illustrating the sandwich assembly before clinching and 28B after clinching. A taper angle or chamfer may optionally be drilled as an exterior part of hole 133 of the die-facing leg segment of the clip if it is desired to have a generally flush button and die-facing surface of the clip. Moreover, Figures 30A and 30B show a leak-proof and unpierced clinch joint 181C, continuous without a hole like the clinching clip 103 illustrated in Figure 2, between leg segments 111 of the clip and the sandwiched two workpiece sheets 105 and 107; with 30A illustrating the sandwich assembly before clinching and 30B afterwards.

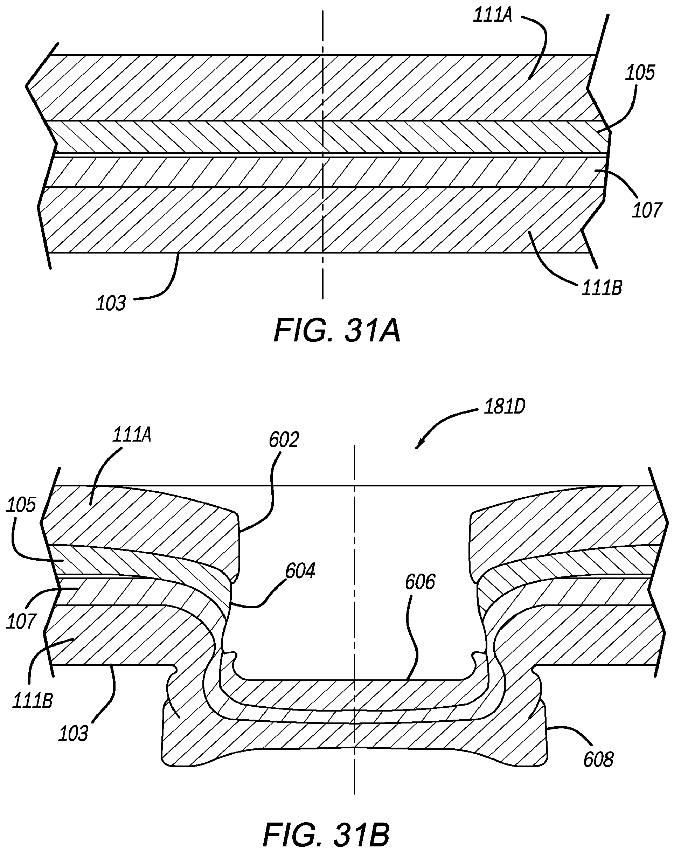

Figures 31A and 31B show a partially pierced clinch joint 181D, starting with the continuous clip 103 of Figure 2 without a hole. Thicker leg segments 111A and 111B of clip 103 sandwich two thinner workpiece sheets 105 and 107. However, the punch is designed in a generally rectangular shape to cut two opposite edge severing and cutting holes 602 and 604 into the adjacent clip leg 111A and at least one of the workpieces 105, and then deform an interlocking clinch cup 606 and button 608 from the die-side clip leg 111B and its adjacent workpiece 107. Figure 31A illustrates the sandwich assembly before clinching and Figure 31B shows it after clinching.

For all of the embodiments discussed herein, the material for the clinch clips may be mild steel, galvanized steel, copper, brass, stainless steel or aluminum. The selection of the material is determined depending on the specific end use application. For the material specific to the garage door mullion example, the clip is 1.0-1.8 mm thick galvanized steel, with a Rockwell hardness scale B of approximately 55 (HRB 55). The Rockwell hardness number being an indication of ductility. The garage door mullion layers are galvanized, pre-painted and textured 0.5-0.7 mm thick per layer at about HRB 20-50. Therefore, each clip leg segment is at least twice the thickness of each workpiece sheet, for this end use application.

For one example pertaining to the Figures 3 and 25A-29B clip with a pre-drilled hole, the ductile clip material preferably has a Rockwell hardness B (HRB) of 40-60, and the workpiece sheet metal has an HRB greater than 60. The Figure 2, 30A and 30B clinch joint without a pre-drilled hole, preferably employs a clip with an HRB of 40-60 and workpiece sheets with a HRB less than 55. In the case of a stainless-steel clip, the exemplary HRB is 55-75, employing a pierced-clinch joint like Figures 31A and 31B. This is when the punch and die cut/lance two of the edges so the punch squeezes the workpiece and punch facing clip material between the lancing punch tip and the die anvil to form an interlock.

In another variation, the ductile clip (in continuous form or with a pre-formed hole) can be used to create a clinch joint between housings of a battery tray for an electric vehicle. Optionally, Figure 29 illustrates a variation where the clinching operation causes a punch-side clip leg 111 to scrape off some of the coating layer 610, such as paint, an e-coating, an anodized layer, a galvanized layer or the like, at bare areas 611 from the housing workpiece 105 during the clinch joint formation, such that a clinched clip 612 thereafter acts as an electrical conductor between workpieces 105 and 107, and/or from an electrical wire connected to the clip. If one or both of the battery tray housing workpieces are polymeric, then holes are preferably pre-formed therein to receive the clinching cup from the deformed clip. The laterally enlarged leg segments adjacent to the clinch joint, advantageously spread out the fastening pressure over a greater surface area as compared to a localized traditional rivet or bolt and nut, thereby better preventing fracture of the workpieces especially if they are polymeric, silicon, ceramic, films or other brittle or thin materials.

It is alternately envisioned that the pre-drilled hole may be provided in a brittle workpiece sheet, such as a silicon printed circuit board or ceramic wall. One or more optional workpiece sheets, such as conductive traces, electronic components, polymeric insulating layers, or films, may be fastened thereto via interlocking clinching deformation of the clip through the hole.

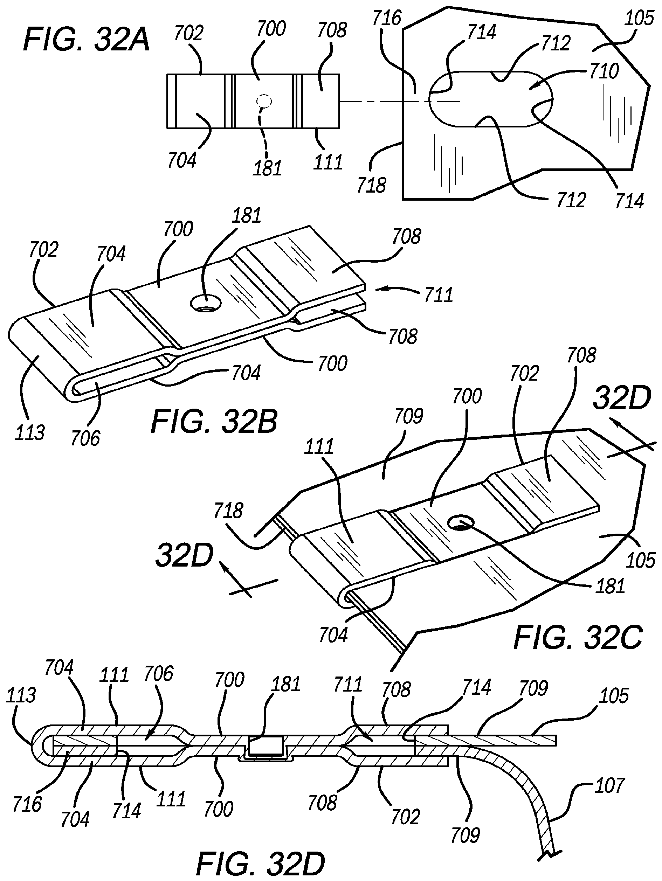

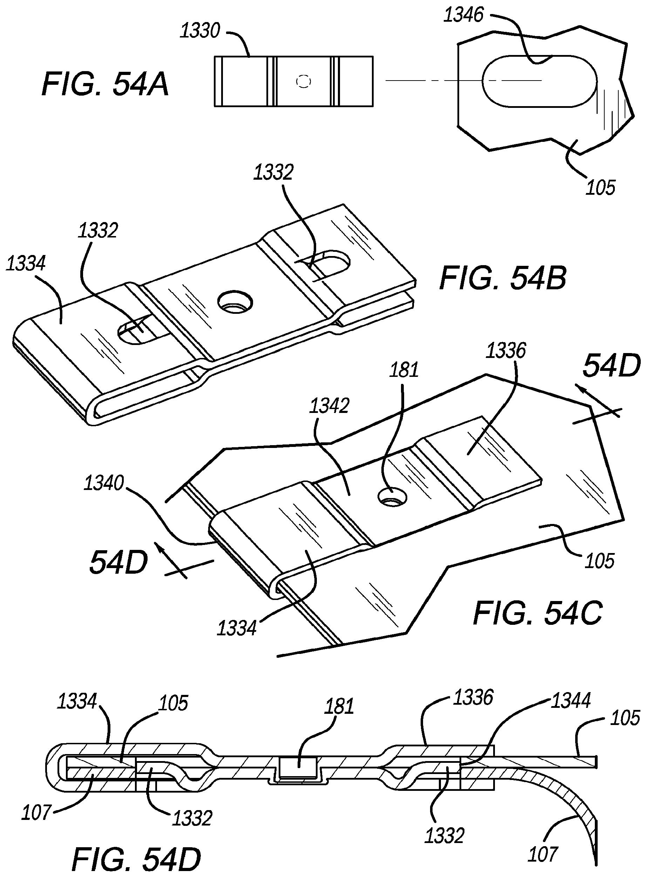

Referring now to Figures 32A-54D, various embodiments of a clinching clip all include a junction segment 113 from which longitudinally extend, overlapping and bifurcated leg segments 111. An intermediate section 700 of each clip has a clinch joint 181 defined by deforming and interlocking only the leg segments, without workpiece sheets 105 and 107 therebetween, to create a cup and expanded button as discussed hereinabove. Thus, interior surfaces of the leg segments at the intermediate section are in direct contact with each other both before and after clinch joint forming by a punch and die as also discussed hereinabove. Exemplary but non-limiting workpiece sheets 105 and 107 are preferably a base and cover of a metallic enclosure, such as a battery tray or housing for an automotive vehicle.

More specifically, a fourteenth embodiment of a clinching clip 702 can be observed in Figures 32A-D. Legs 111 have a spaced apart and proximal, clevis section 704, creating a hollow cavity 706 therein, longitudinally bordered by C-shaped junction 113 on one end and intermediate section 700 on the other end. Bifurcated and overlapping distal end sections 708 are spaced apart such that their interior surfaces define an openly accessible gap or receptacle 711 therein. An exterior surface of intermediate section 700 of each leg 111 is depressed below a plane defined by exterior surfaces of clevis section 704 and distal end sections 708; thus, each leg has a valley at intermediate section 700 between raised sections 704 and 708.

Overlapping flanges 709 of workpieces 105 and 107 each have a longitudinally elongated slot or aperture 710, with straight and parallel lateral edges 712 and arcuate longitudinal end edges 714. A spanning portion 716 of each workpiece is located between an outermost aperture edge 714 and a peripheral edge 718.

The flanges of the workpieces are temporarily clamped together between tooling clamps, and then clip 702 is manually or automatically (via a mechanized pusher arm) slid onto workpieces, the main portion of flanges 709, inboard of aperture 710, is inserted into receptacle 711 between distal end sections 708 of legs 111. Further insertion of clip 702 causes spanning portion 716 of the workpieces to temporarily spread apart and pass through intermediate sections 700 and then enter into and be trapped within clevis section 704 of the clip. Thereafter, the clinching tools clamp the opposite intermediate sections between the stripper and the die, and then the punch is advanced toward the die anvil and die blades to deform the intermediate sections into the interlocking clinch joint 181. The punch and stripper are retracted, and the workpiece and clip apparatus are subsequently removed from the clinching tools.

Aperture 710 and the shape of intermediate section 700 beneficially align and better retain the clip to the workpieces before, during and after clinch joint formation. It should be noted that the aperture in the workpieces is optionally oversized in at least the longitudinal direction to provide tolerance variations between parts. While the interior and exterior surfaces of sections 700, 704 and 708 of the clip are preferably flat and parallel when clinched to the workpieces, they may alternately include stamped ribs, undulations or other shapes.

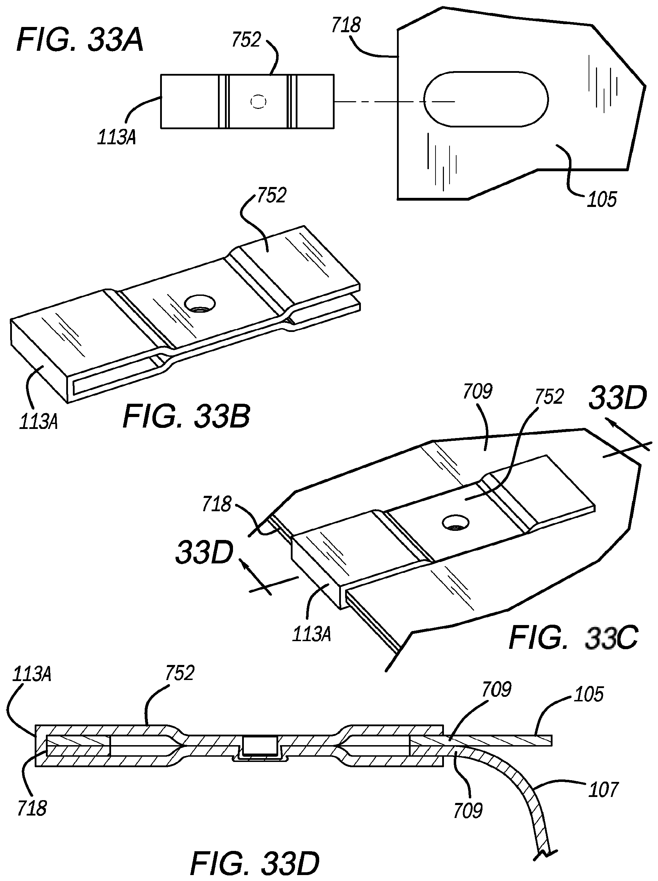

A fifteenth embodiment of a clinching clip 752 can be observed in Figures 33A-D. Clip 752 is identical to that of the previous embodiment except that junction segment 113A has flat exterior and interior surfaces to more snuggly fit against peripheral edges 718 of flanges 709 of workpieces 105 and 107. This flat junction configuration may be used instead of the curved C-shaped junctions illustrated with any of the other embodiment clips herein.

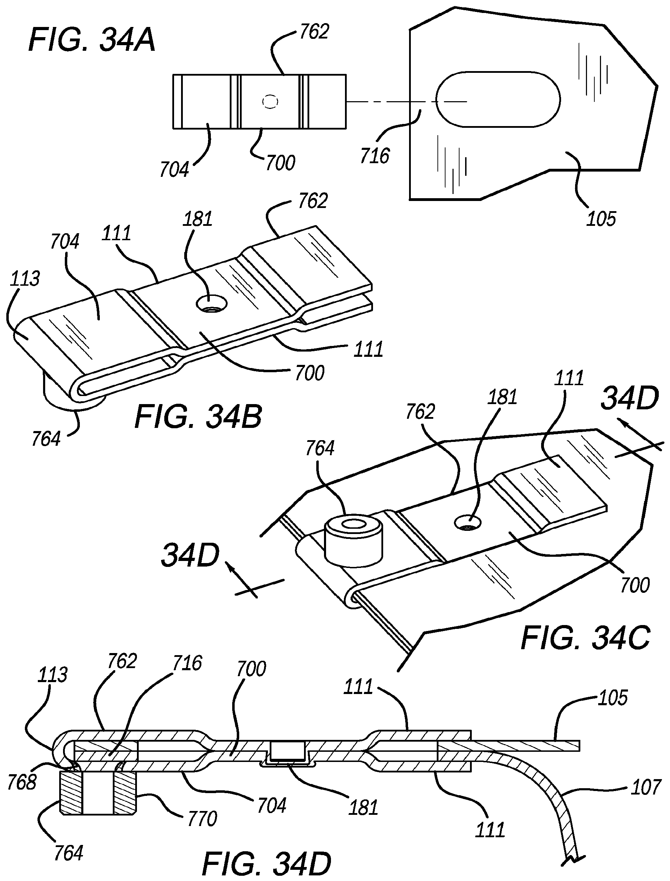

A sixteenth embodiment of a clinching clip 762 can be observed in Figures 34A-D. Clip 762 is identical to that of the previous embodiment except an internally threaded nut or boss 764 is attached to one of legs 111 at clevis section 704. Nut 764 is preferably a self-piercing clinch nut fastener that has a leading tapered and cylindrical end 768, projecting from a nut body 770, which cuts into and then outwardly expands to engage within the clevis section. Nut 764 is preferably secured to clip 762 before the clip is inserted onto workpieces 105 and 107, and before clinch joint 181 is formed in intermediate section 700. Alternately, the nut may be welded, adhered or otherwise attached to the clevis section. Nut 764 is preferably located closer to junction segment 113 than to intermediate segment 700, and the nut is aligned with at least some of spanning portion 716. A threaded fastener, such as a bolt, may thereafter be removably attached within nut 764, to attach an accessory component such as an electrical eyelet, handle, hinge or the like.

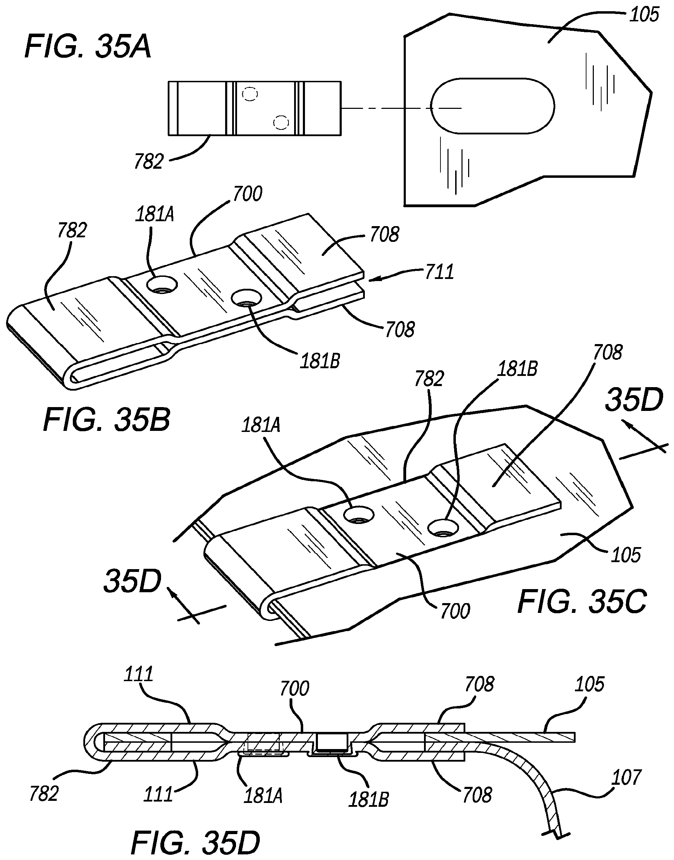

Figures 35A-D illustrate a seventeenth embodiment of a clinching clip 782. Clip 782 is identical to that of the Figure 32A-D embodiment except that multiple, preferably two, clinch joints 181A and 181B, are formed by multiple parallel punches deforming and interlocking legs 111 together at intermediate section 700, against one or more aligned die anvils. Preferably, the two clinch joints 181A and 181B are diagonally arranged relative to each other, such that they are both laterally and longitudinally offset from each other. This pattern beneficially deters rotation of clip 782 relative to workpieces 105 and 107 after the clip is secured to the flanges thereof, and has multi-axis position control. This multiple joint configuration also provides a stronger connection between legs 111 of the clip, thereby more durably securing the workpieces within receptacle 711 between distal end sections 708. It should be appreciated that this multiple clinch joint configuration may be used with any of the other embodiments disclosed herein.

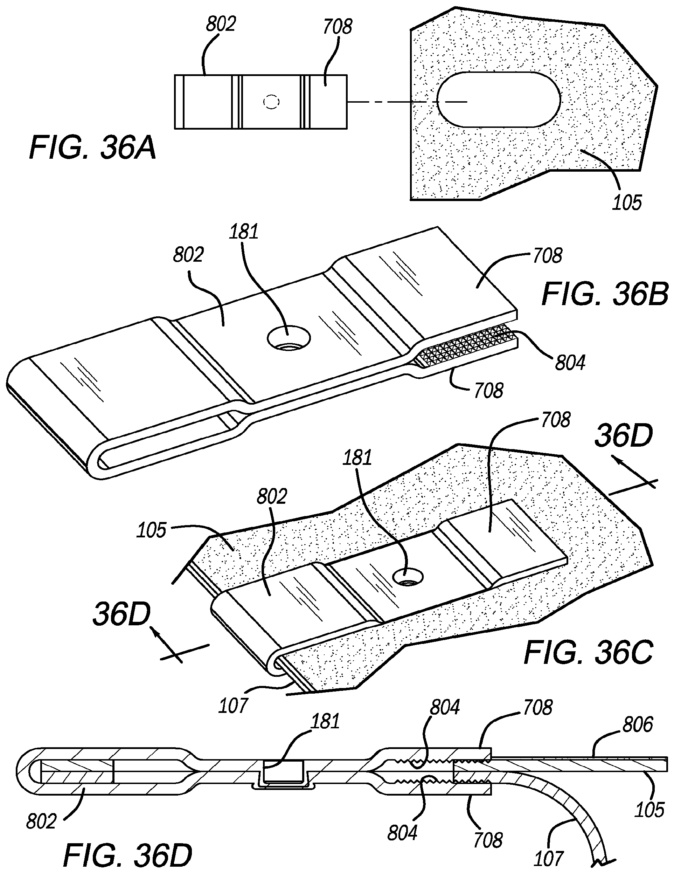

Referring to Figures 36A-D, an eighteenth embodiment of a clinching clip 802 is identical to that of the Figure 32A-D embodiment except that teeth 804, knurl patterning, alternating pointed peaks and valleys, or the like, project from internal surfaces of distal end sections 708 of legs 111. Alternately, the teeth may only project from one of the distal end sections with the opposing distal end section being smooth. There are preferably at least ten rows and at least ten columns of teeth 804 on each of distal end sections 708. Each tooth is preferably laterally smaller than a diameter of clinch joint 181.

Teeth 804 advantageously pierce through a coating layer 806 on the flanges of workpieces 105 and 107, to provide a more direct electrical connection between clip 802 and the workpieces, if an electrical eyelet or wire is attached to the clip as discussed in other embodiments herein. Furthermore, teeth 804 create a firmer gripping engagement into the workpiece flanges. It should be appreciated that this teeth pattern configuration may be used with any of the other embodiments disclosed herein.

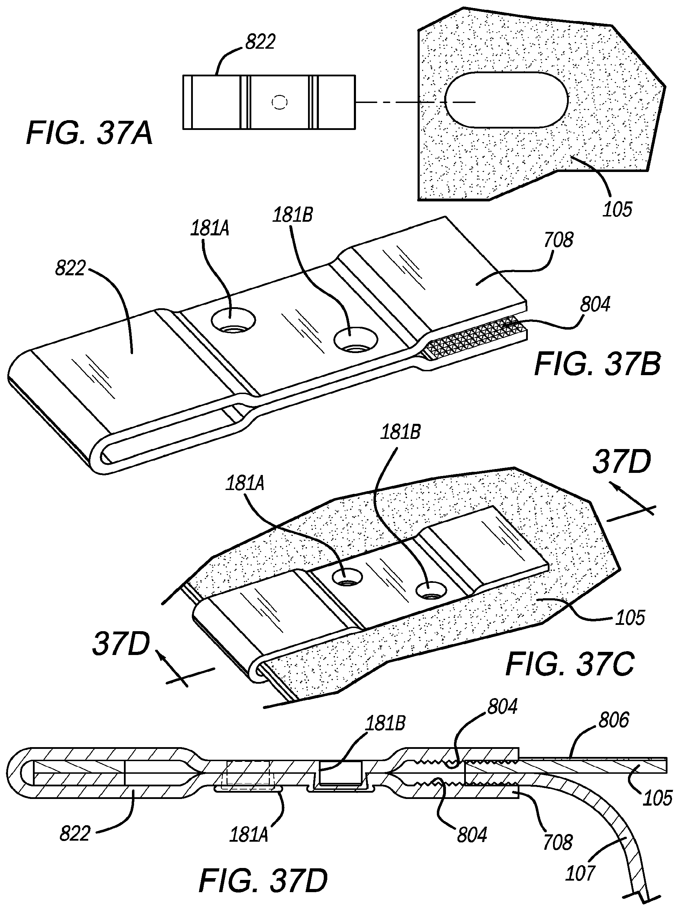

Next, a nineteenth embodiment of a clinching clip 822, shown in Figures 37A-D, is a combination of the Figure 35A-D embodiment and the Figure 36A-D embodiment. This exemplary clinching clip 822 includes teeth 804, knurl patterning, alternating pointed peaks and valleys, or the like, projecting from internal surfaces of distal end sections 708 of legs 111. Additionally, multiple, preferably two, clinch joints 181A and 181B, are formed by multiple parallel punches deforming and interlocking legs 111 together at intermediate section 700, against one or more aligned die anvils. Preferably, the two clinch joints 181A and 181B are diagonally arranged relative to each other. The teeth pierce through coating 806 on workpieces 105 and/or 107, the multiple clinch joints provide improved position control, and both the teeth and multiple clinch joints offer improved gripping engagement.

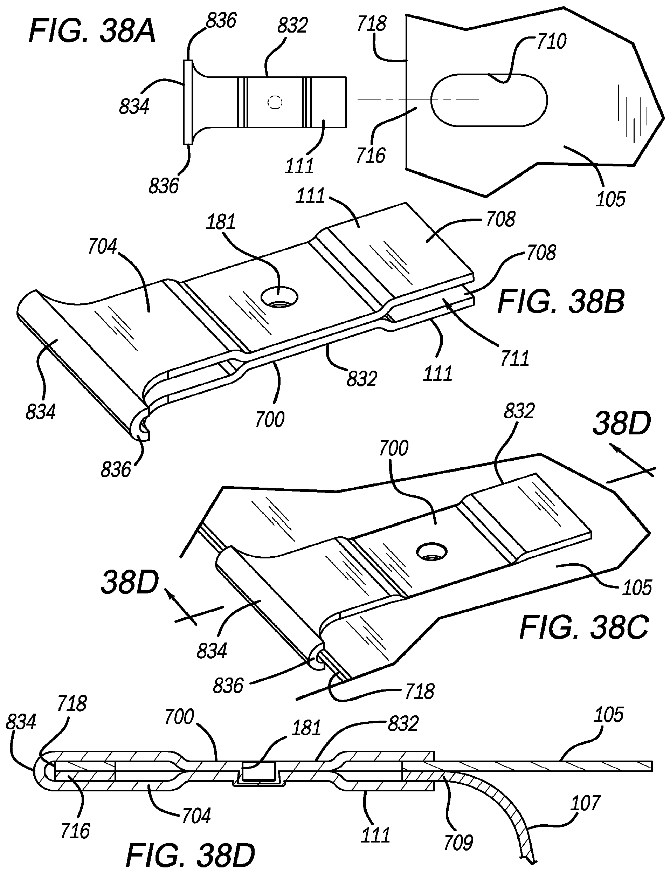

Figures 38A-D depict a twentieth embodiment clinching clip 832. This clip 832 includes legs 111 having a spaced apart and proximal, clevis section 704, longitudinally bordered by C-shaped (or alternately, flat-walled) junction segment 834 on one end and intermediate section 700 on the other end. Bifurcated and overlapping distal end sections 708 are spaced apart such that their interior surfaces define an openly accessible gap or receptacle 711 therein.

Overlapping flanges 709 of workpieces 105 and 107 each have longitudinally elongated slot or aperture 710. Spanning portion 716 of each workpiece is located within clevis section 704, and intermediate section 700 is located within workpiece aperture 710, while main portions of the workpieces are received and gripped within distal end sections 708 of legs 111, when clinch joint 181 is created within intermediate section.

Junction segment 834 includes a laterally wider heal 836 than a nominal width of each leg 111 at the intermediate and distal end sections, thereby defining a generally T-shape in the plan view of Figure 38A. Heal 836 has a C-shaped wall (but may alternately have three intersecting straight walls) that snugly abut against peripheral edges 718 of workpieces 105 and 107. This wider and laterally extended heal version of junction 834 provides increased anti-torque and anti-rotational control of the clip to the workpiece sheets.

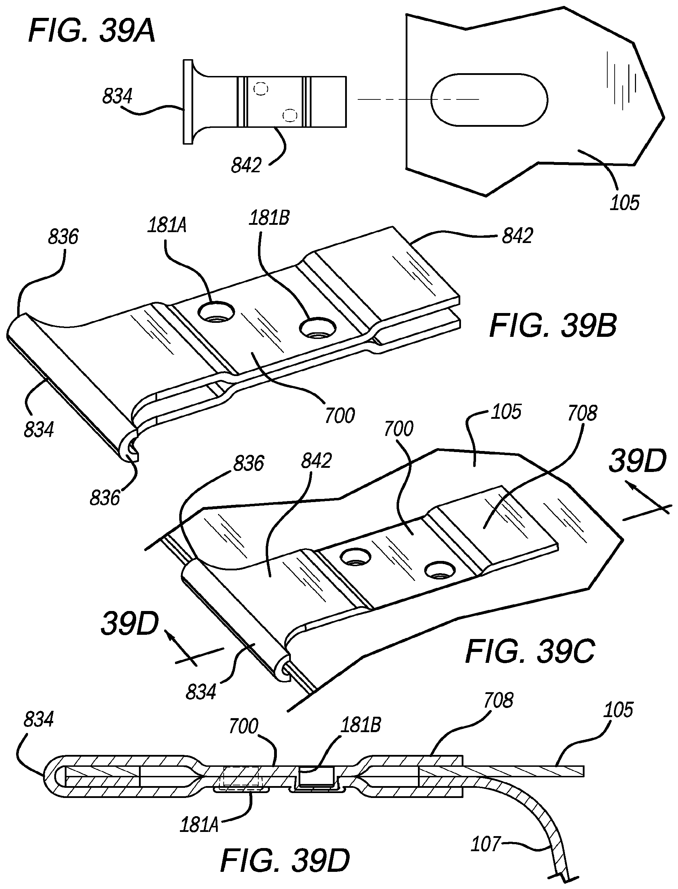

A twenty-first embodiment of a clinching clip 842, illustrated in Figures 39A-D, is a combination of the Figure 35A-D embodiment and the Figure 38A-D embodiment. This exemplary clinching clip 842 includes junction segment 834 with a laterally wider heal 836 than a nominal width of each leg 111 at intermediate section 700 and distal end section 708, thereby defining a generally T-shape in the plan view of Figure 39A. Additionally, multiple, preferably two, clinch joints 181A and 181B, are formed by multiple parallel punches deforming and interlocking legs 111 together at intermediate section 700, against one or more aligned die anvils. Preferably, the two clinch joints 181A and 181B are diagonally arranged relative to each other. This wider and laterally extended heal version of junction 834 in addition to the multiple diagonally arranged clinch joints 181A and 181B, synergistically provide increased anti-torque and anti-rotational control of the clip to the workpiece sheets, and increased gripping strength durability.

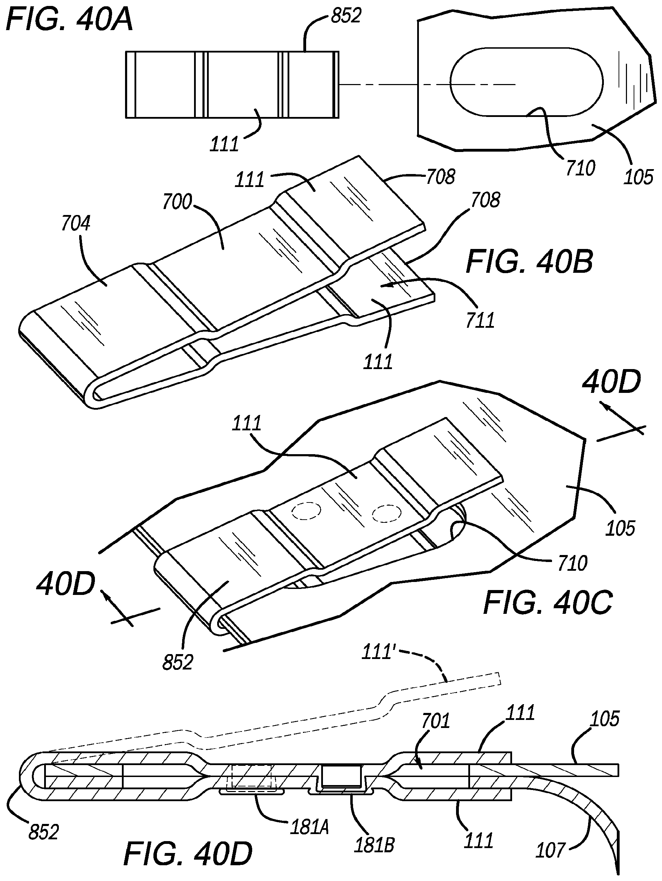

Figures 40A-D show a twenty-second embodiment of a clinching clip 852. This clip 852 includes legs 111 having a spaced apart and proximal, clevis section 704, longitudinally bordered by C-shaped (or alternately, flat-walled) junction segment 133 on one end and intermediate section 700 on the other end. Bifurcated and overlapping distal end sections 708 are spaced apart such that their interior surfaces define an openly accessible gap or receptacle 711 therein.

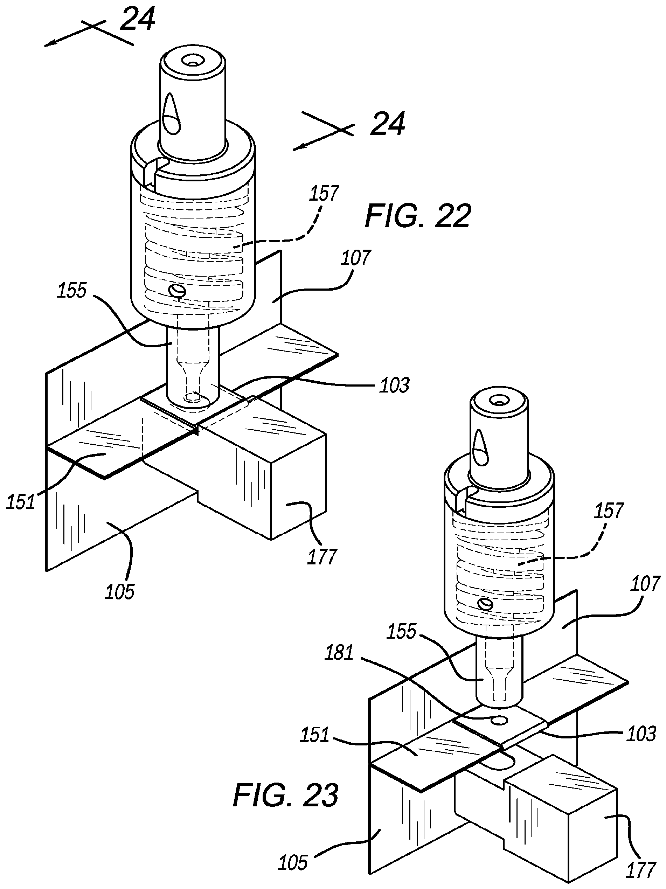

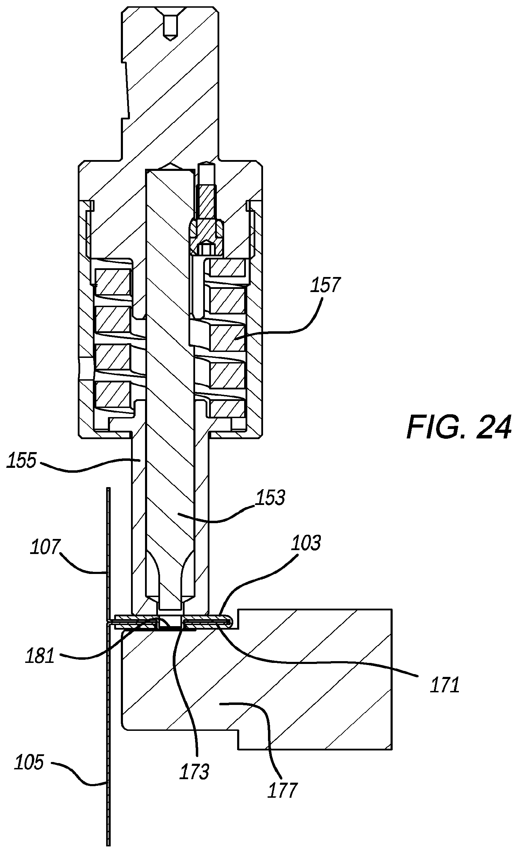

It is notable that at least one of legs 111 is initially stamped to be offset angled from the other of the legs, at an acute angle such as 10-30° and more preferably 15-25°. This open leg angling provides easier insertion of workpieces 105 and 107 into access receptacle 711 between distal end segments 708 when clip 852 is slid thereon. After initial clip insertion, stripper 155 (see Figures 22 and 24) or an auxiliary clamp serves to automatically compress the outwardly angled leg 111 of clip 852 toward the die-held opposite leg 111, so that punch 153 is then able to create clinch joints 181A and 181B between the directly contacting legs at intermediate section 700.

Overlapping flanges of workpieces 105 and 107 each have longitudinally elongated slot or aperture 710. Spanning portion 716 of each workpiece is located within clevis section 704, and intermediate section 700 is located within workpiece aperture 710, while main portions of the workpieces are received and gripped within distal end sections 708 of legs 111, when one or more clinch joints 181A and 181B are created within intermediate section. It is alternately envisioned that only intermediate and distal end sections 700 and 708 of one leg are openly angled in an offset manner from the opposite leg sections, without clevis section 704 being similarly offset angled. It is also alternately envisioned that a taper be added to edges of one or both of distal end sections 708 to further ease workpiece insertion, although this added manufacturing step may undesirably increase cost.

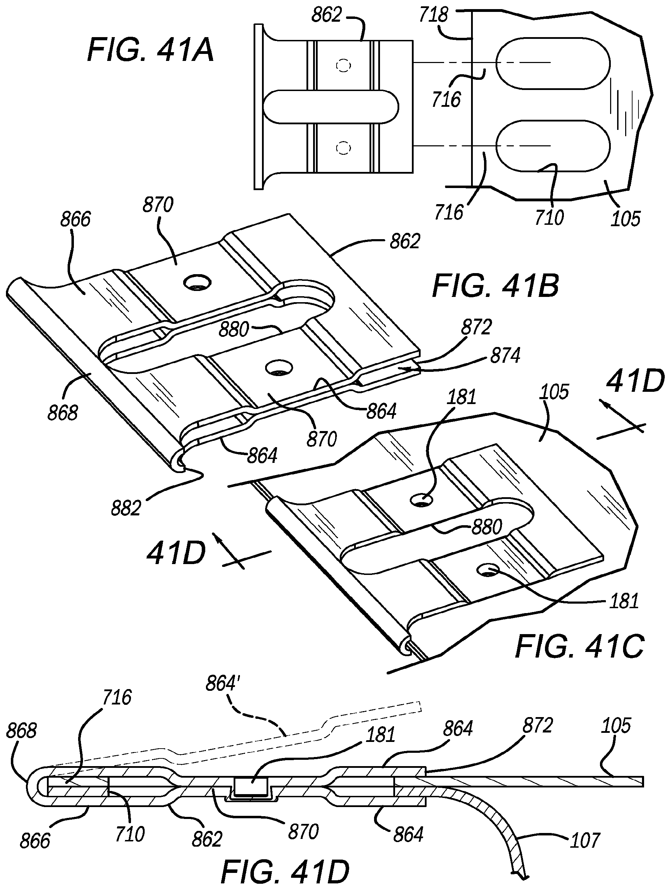

Reference should now be made to Figures 41A-D where a twenty-third embodiment clinching clip 862 can be observed. This clip 862 includes two pairs of legs 864 having spaced apart and proximal, clevis sections 866, longitudinally bordered by a single C-shaped (or alternately, flat-walled) junction segment 868 on one end and intermediate sections 870 on the other end. Bifurcated and overlapping distal end sections 872 of each leg are spaced apart such that their interior surfaces define an openly accessible gap or receptacle 874 therein. A single distal end section 872 laterally spans between a pair of co-planar intermediate sections 870. Moreover, a longitudinally elongated slotted opening 880 is laterally between each pair of co-planar intermediate sections 870 and laterally between each pair of co-planar clevis section 866. Optionally, at least one of co-planar pair of legs 864' is openly angled relative to the opposed legs.

Each workpiece flange includes a pair of laterally spaced apart, and longitudinally elongated slots or apertures 710, each having straight lateral edges and curved longitudinal edges. Overlapping flanges of workpieces 105 and 107 each have longitudinally elongated slot or apertures 710. Spanning portion 716 of each workpiece is located within clevis sections 866, and intermediate sections 870 are located within the corresponding workpiece apertures 710, while main portions of the workpieces are received and gripped within distal end sections 872 of legs 864, when clinch joints 181 are created within the intermediate sections.

Junction segment 868 includes a laterally wider heal 882 than a nominal width of each leg 864 at the intermediate section thereof, thereby defining a generally T-shape in the plan view of Figure 41A. Heal 882 has a C-shaped wall (but may alternately have three intersecting straight walls) that snugly abut against peripheral edges 718 of workpieces 105 and 107. This wider and laterally extended heal version of junction 868 and double-wide legs 864 advantageously provide increased anti-torque and anti-rotational control of the clip to the workpiece sheets, while additionally increasing the clip-to-workpiece sheet clamping area.

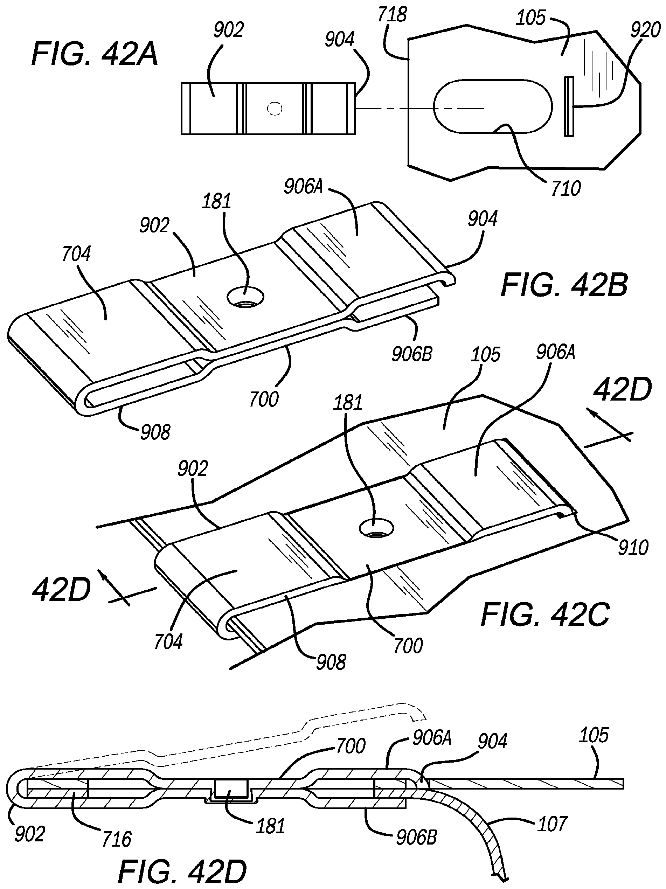

The clinching clip and workpiece apparatus configuration of Figures 42A-D is similar to those of Figures 32A-D or Figures 40A-D, however, the present clinching clip 902 additionally includes an inwardly turned foot or hook 904 on at least one distal end section 906A of bifurcated legs 908. Preferably, an opposite distal end section 906B has a flat and straight shape, or optionally, a tapered distal edge. Hook 904 fits into a laterally elongated groove or through-slot 910 pierced into workpiece 105. Longitudinally elongated aperture 712 is located between lateral slot 910 and spanning section 716.

Accordingly, clip 902 is inserted onto workpiece sheets 105 and 107 by sliding distal end sections 906 A and 906B past peripheral edges 718 of the sheets such that intermediate sections 700 snap into aperture 710 while spanning sections 716 of the sheets are received within clevis section 704. Full clip insertion allows hook 904 to snap into slot 910. Thereafter, the punch and die tooling deform one or more clinch joints 181 between the intermediate sections 700. Hook 904 provides an additional pre-clinch and post clinch location retention function, while also deterring rotation of the clip relative to the workpieces. A further advantage is that the hook only engages with one workpiece sheet 105 while allowing pre-clinching movement or adjustment of the other workpiece sheet 107 relative thereto, during and/or after clip 902 has been initially inserted thereon.

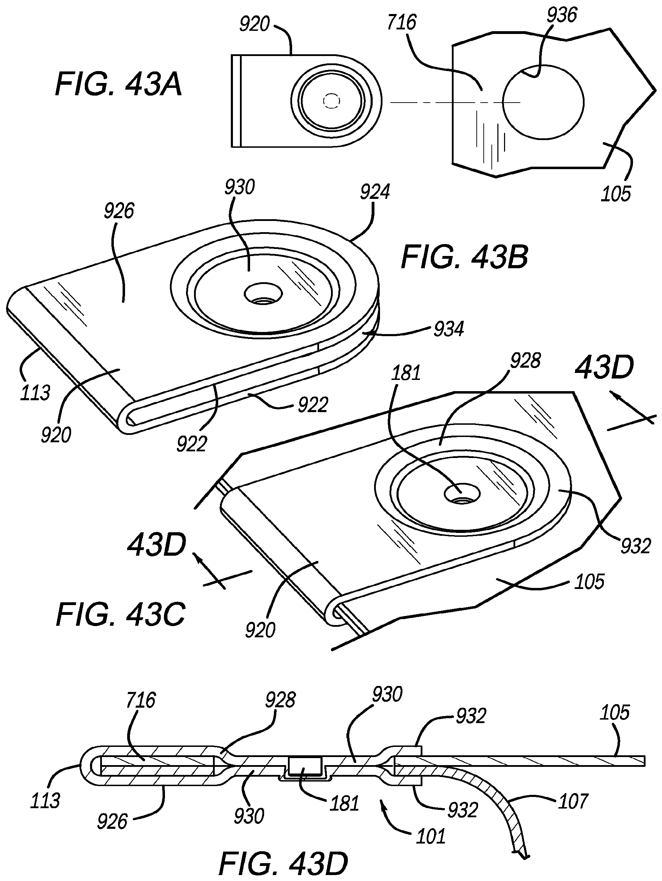

Referring to Figures 43A-D, a twenty-fifth embodiment of apparatus 101 includes a clinching clip 920 and multiple workpiece sheets 105 and 107. Clinching clip 920 has a pair of spaced apart and generally parallel leg segments 922 extending from a curved or flat-walled junction segment 113. The bifurcated leg segments 922 define a generally C-shape with an open slot between arcuate end edges 924 thereof.

Each leg 922 includes a generally flat clevis section 926 laterally bordered by straight and longitudinally elongated side edges, a downwardly angled and circular transition section 928, a generally flat and circularly depressed intermediate section 930 surrounded by the transition section, and a bifurcated distal end section 932. Distal end section 932 is co-planar with clevis section 926 and has a gap or receptacle 934 between the opposite leg portions thereof to allow access and gripping between distal end sections 932 after a clinch joint 181 has been deformed into depressed intermediate sections 930. Workpiece sheets 105 and 107 have a circular aperture 934 therein matching intermediate sections 926, which fit into the aperture so that spanning portion 716 of workpieces is also received and held within clevis section 926.

Clinch joint 181 is concentric with transition section 928 and a circular periphery of depressed intermediate section 930, and all of which are longitudinally closer to end edges 924 than to junction 113. This shape of distal end section and clevis section, which clamps the workpieces therebetween, provide both longitudinally and laterally uniform gripping pressure. Also, the circular nature of workpiece aperture 936 reduces stress points and fracture intersections in the workpieces. It is alternately envisioned that the circular shaped segments and apertures may instead have alternate arcuate shapes, such as ovals and the like.

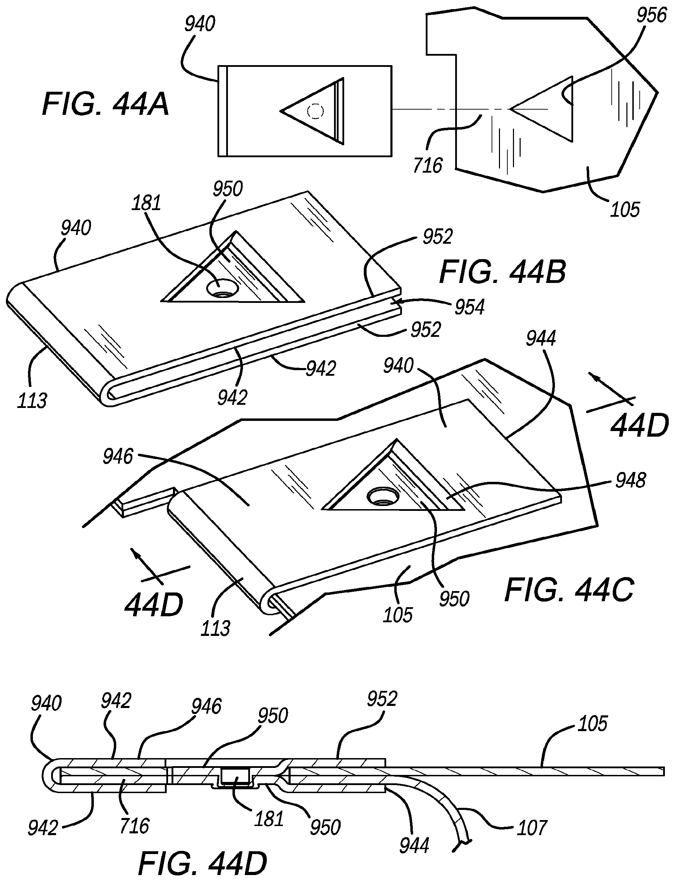

Another exemplary clinching clip 940 can be seen in Figures 44A-D. This clip 940 is the same as the Figure 43A-D embodiment, however, this version employs polygonal shapes, preferably triangles although pentagons, hexagons, octagons, and the like may instead be employed. More specifically, clinching clip 940 has a pair of spaced apart and generally parallel leg segments 942 extending from a curved or flat-walled junction segment 113. The bifurcated leg segments 942 define a generally C-shape with an open slot between straight end edges 944 thereof.

Each leg 942 includes a generally flat clevis section 946 laterally bordered by straight and longitudinally elongated side edges, a downwardly angled and triangular transition section 948, a generally flat and triangularly depressed intermediate section 950 surrounded by the transition section, and a bifurcated distal end section 952. Each distal end section 952 is co-planar with clevis section 946 and there is a gap or receptacle 954 between the opposite leg portions thereof to allow access and gripping between distal end sections 952 after a clinch joint 181 has been deformed into depressed intermediate sections 950. Workpiece sheets 105 and 107 have a triangular aperture 956 therein matching intermediate sections 946, which fit into the aperture so that spanning portion 716 of the workpieces is also received and held within clevis section 946.

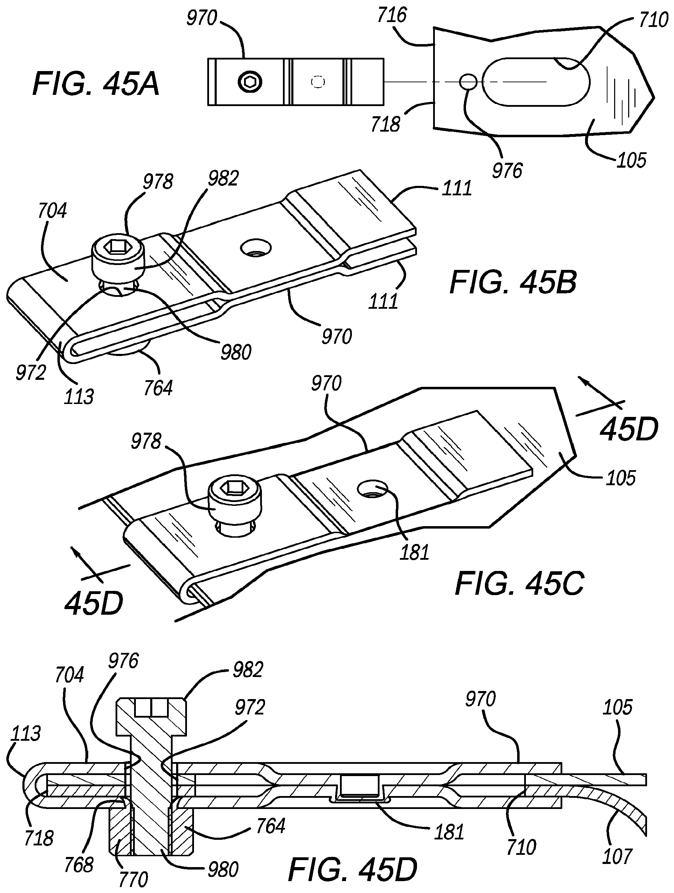

A twenty-seventh embodiment of a clinching clip 970 can be viewed in Figures 45A-D. Clip 970 is similar to that of the Figure 34A-D embodiment except that internally threaded nut or boss 764 is attached to one of legs 111 but in a middle of clevis section 704. Nut 764 is spaced longitudinally inboard of both junction 113 and peripheral edge 718 of workpieces 105 and 107. Also, through-holes 972 are in clevis section 704 coaxially aligned with the threaded bore of nut 764, and also coaxially aligned with circular apertures 976 in spanning portion 716 of the flanges of workpieces 105 and 107. In other words, bolt-receiving apertures 976 are spaced outboard of longitudinally elongated clip-receiving apertures 710, which are each at least twice larger in length and width than each aperture 976.

Nut 764 is preferably a self-piercing clinch nut that has a leading tapered and cylindrical end 768, projecting from a nut body 770, which cuts into and then outwardly expands to engage within the clevis section. A fastener, such as a bolt 978 with a fully or partially externally threaded shaft 980 and a laterally enlarged head 982, is removably attached within nut 764, to attach an accessory component such as an electrical eyelet, handle, hinge or the like.

Nut 764 is preferably attached to clip 970 prior to the clip's insertion onto the workpieces and thereafter bolt is inserted into the clip and nut either before or after punch and die formation of clinch joint 181 in the clip. Shaft 980 extends through holes 972 in legs 111 and also through apertures 976 of workpieces 105 and 107. This clip version beneficially provides both a workpiece flange attachment function and a removable accessory attachment function.

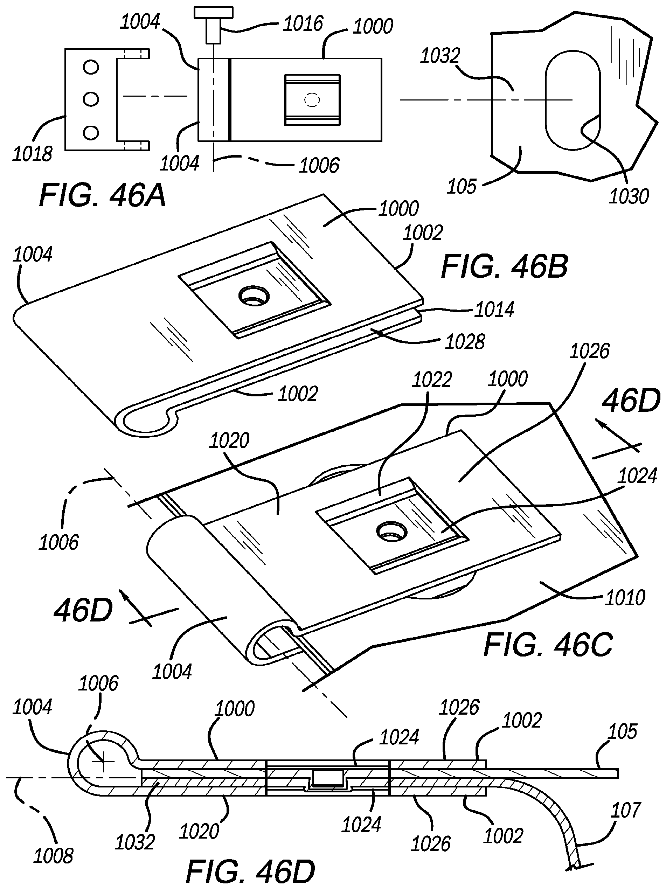

Another exemplary clinching clip 1000 can be seen in Figures 46A-D. This clip 1000 is similar to the Figure 44A-D embodiment, however, this version employs different polygonal shapes, preferably a square or rectangle. Clinching clip 1000 has a pair of spaced apart and generally parallel leg segments 1002 extending from a curved junction segment 1004. Junction 1004 has an enlarged ring-like and partially cylindrical side view shape with a hollow internal area having a laterally extending centerline 1006 that is raised offset from a plane 1008 where flanges 1010 of workpieces 105 and 107 are in contact. The bifurcated leg segments 1002 define a generally C-shape with an open slot between straight end edges 1014 thereof. Ring-like junction 1004 synergistically serves the dual roles of retaining together the legs during manufacturing and insertion onto the workpieces, while also acting as a receiver or holder for insertion of a laterally elongated accessory member such as a wire, cable, conduit, or pintle or pin 1016 for a hinge 1018.

Each leg 1002 includes a generally flat clevis section 1020 laterally bordered by straight and longitudinally elongated side edges, a downwardly angled and square transition section 1022, a generally flat and square depressed intermediate section 1024 surrounded by the transition section, and a bifurcated distal end section 1026. Each distal end section 1026 is co-planar with the associated clevis section 1020 and there is a gap or receptacle 1028 between the opposite leg portions thereof to allow access and gripping between distal end sections 1026 after a clinch joint 181 has been deformed into depressed intermediate sections 1024. Workpiece sheets 105 and 107 have a laterally elongated and oversized aperture 1030 therein, within which intermediate sections 1024 fit such that a spanning portion 1032 of the workpieces is also received and held within clevis section 1020.

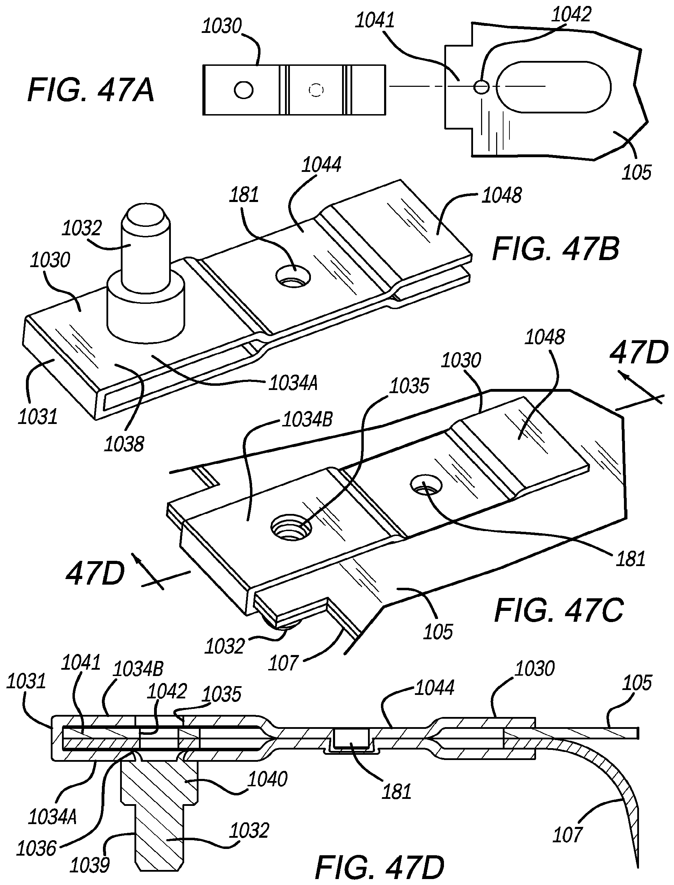

A twenty-ninth embodiment of a clinching clip 1030 is shown in Figures 47A-D. A flat walled junction 1031 is illustrated, which beneficially locates snugly against peripheral edges of workpiece flanges, although a curved C-shaped junction may instead be employed. Clip 1030 includes both an externally threaded shoulder stud or bolt fastener 1032 attached to one leg 1034A, and also a nut-like hole 1035 in an opposite leg 1034B. Bolt 1032 preferably includes a self-piercing and tapered leading end 1036, which cuts into and outwardly expands when compressed into a middle of a clevis section 1038 of the clip. Furthermore, bolt optionally includes a threaded shaft 1039, and an unthreaded and laterally wider shoulder 1040 in contact with clevis section 1038.

A spanning portion 1041 of overlapping flanges of workpieces 105 and 107 also have through-holes 1042 which are aligned with hole 1035 of clip 1030. Optionally, one or more of holes 1035 and 1042 are internally threaded to act as a nut to receive an externally threaded screw or bolt fastener therein, or a self-tapping fastener may be inserted therein to cut its own thread into the hole surfaces. Hole 1035 of the clip is spaced longitudinally inboard of junction 1031, from which legs 1034A and 1034B longitudinally extend.

Also, holes 1035 and 1042 are in clevis section 1038, are coaxially aligned with bolt 1032, and all are longitudinally spaced outboard from and have a greater diameter than a clinch joint 181 located in depressed intermediate sections 1044 of the legs. Intermediate section 1044 fits within a longitudinally elongated aperture 1046 in workpieces such that distal end sections 1048 receive and fasten workpiece sheets 105 and 107 within an opening therein. This clip version beneficially provides both a workpiece flange attachment function and a removable accessory attachment function.

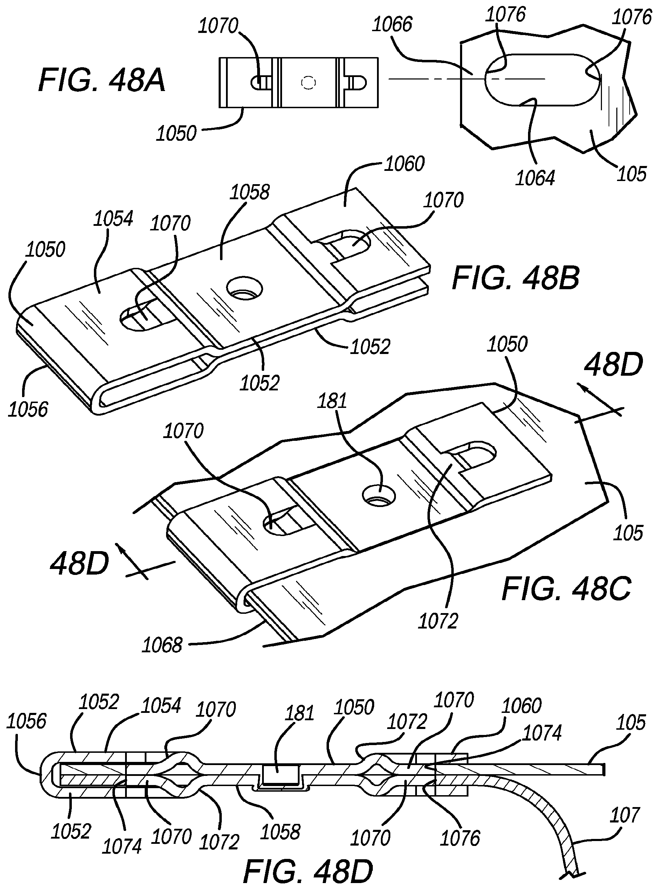

As can be seen in Figures 48A-D, a thirtieth embodiment of a clinching clip 1050 includes a pair of legs 1052 each having a spaced apart and proximal, clevis section 1054, creating a hollow cavity therein, longitudinally bordered by C-shaped junction 1056 on one end and a depressed intermediate section 1058 on the other end. Bifurcated and overlapping distal end sections 1060 of the legs are spaced apart such that their interior surfaces define an openly accessible gap or receptacle 1062 therein. One or more clinch joints 181 are deformed to interlock together intermediate sections 1058 of legs 1052 and to secure together workpieces 105 and 107 between distal end sections 1060.

Overlapping flanges of workpieces 105 and 107 each have a longitudinally elongated slot or aperture 1064, with a spanning portion 1066 of each workpiece located between an outermost aperture edge and peripheral edges 1068 of the workpiece flanges. Notably, longitudinally projecting tabs 1070 are inwardly bent from each clevis section 1054 and from each distal end section 1060. Hence, tabs 1070 are downwardly angled in a curved manner, from a peak of a diagonal (or upwardly curved) transition wall 1072, the transition wall being located between the depressed intermediate section and the clevis or distal end sections. A lowest leading end 1074 of each tab is substantially co-planar with an associated one of the workpiece sheets 105 or 107, such that leading end 1074 abuts against a longitudinal edge 1076 of workpiece apertures 1064. These tabs 1070 advantageously locate and retain clip 1050 to the workpieces before clinch joint 181 is formed therein to provide the permanent fastening. Leading end 1074 of each tab may be curved as is shown, or straight. Such tabs may be employed within any of the clip embodiments disclosed herein.

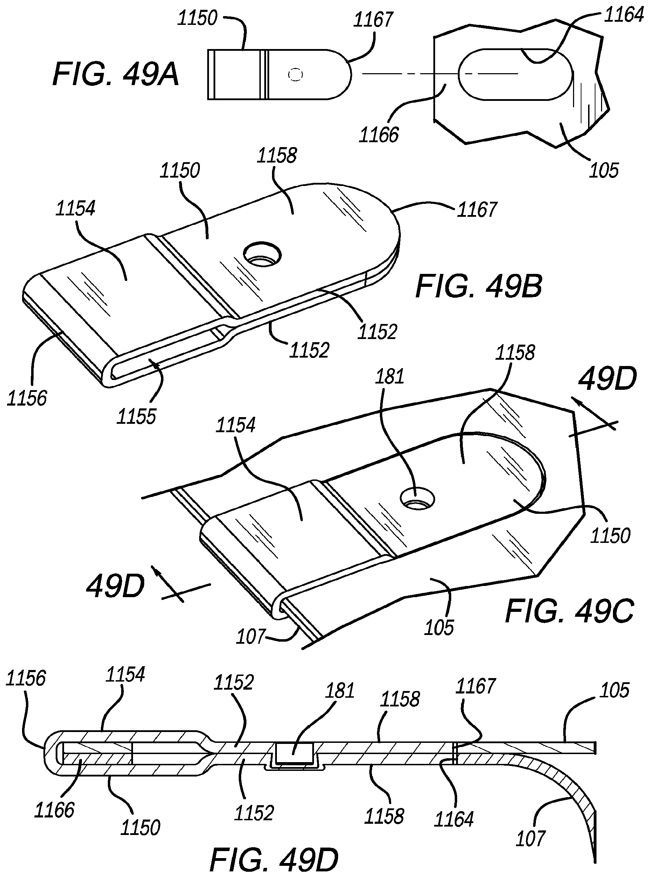

Figures 49A-D illustrate a thirty-first embodiment of a clinching clip 1150 which includes a pair of legs 1152 each having a spaced apart and proximal, clevis section 1154, creating a hollow cavity 1155 therein, longitudinally bordered by C-shaped junction segment 1156 on an outboard end and depressed sections 1158 on an inboard end. One or more clinch joints 181 are deformed to interlock together depressed sections 1158 of legs 1152, which serves to clamp and trap spanning portion 1166 of workpieces 105 and 107 in a fastened manner. The outboard end of clip 1150 has curved edges 1167, although they may alternately have straight shapes, matching curved longitudinal edges of apertures 1164 through the workpiece flanges. Furthermore, exterior surfaces of depressed sections 1158 are preferably flat and co-planar with the adjacent overlapping flanges of workpieces 105 and 107, when the depressed sections are received within apertures 1164.

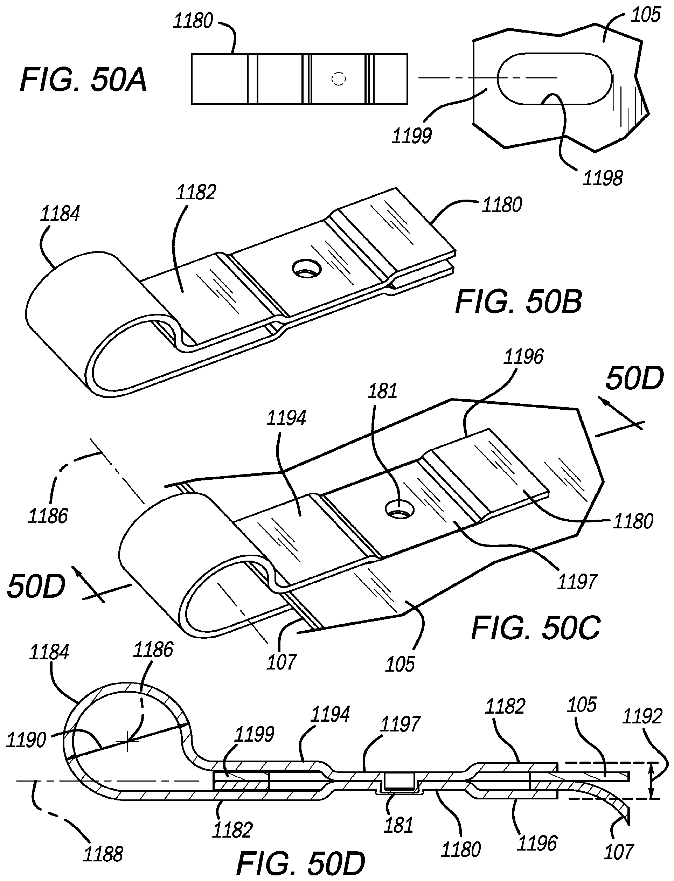

A further exemplary clinching clip 1180 can be seen in Figures 50A-D. This clip is similar to that of the clip shown in Figures 46A-D, except the present clip 1180 has a different intermediate section and larger ring or loop junction. More specifically, clinching clip 1180 has a pair of spaced apart and generally parallel leg segments 1182 extending from a curved junction segment 1184. Junction 1184 has an enlarged ring-like and partially cylindrical side view shape with a hollow internal area having a laterally extending centerline 1186 that is raised offset from a plane 1188 where the flanges of workpieces 105 and 107 are in contact. The bifurcated leg segments 1182 define a generally C-shape with an open slot between straight end edges thereof. Ring-like junction 1184 synergistically serves the dual roles of retaining together the legs during manufacturing and insertion onto the workpieces, while also acting as a receiver or holder for insertion of a laterally elongated accessory member such as a wire, cable, conduit, or pintle or pin for a hinge. It is notable that an outer diameter 1190 of junction 1184 is at least twice a thickness 1192 of the clinched clip at generally flat clevis sections 1194 and bifurcated distal end sections 1196.

Each distal end section 1196 is co-planar with the associated clevis section 1194. Moreover, there is a gap or receptacle between the opposite leg portions thereof to allow access and gripping of workpiece sheets 105 and 107 therein after clinch joint 181 has been deformed into depressed intermediate sections 1197. Workpiece sheets 105 and 107 have a longitudinally elongated and oversized aperture 1198 therein, within which intermediate sections 1197 fit such that a spanning portion 1199 of the workpieces is also received and held within clevis sections 1194.

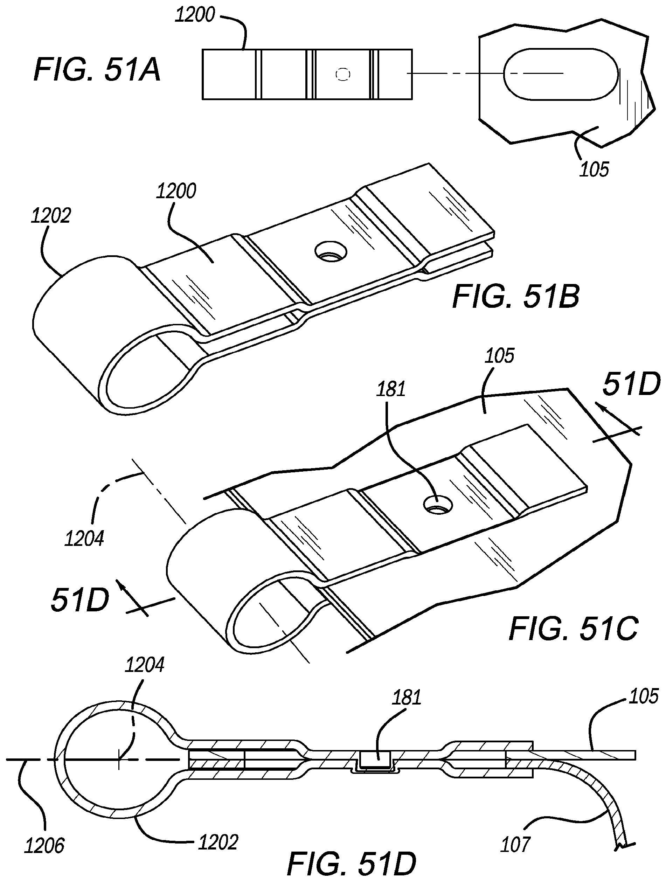

A Figure 51A-D embodiment of a clinching clip 1200 is similar to that of the clip shown in Figures 50A-D, except the present clip 1200 includes a ring or look-like, mostly cylindrical junction 1202 having a laterally extending centerline 1204 that is substantially co-planar with a plane 1206 where the flanges of workpieces 105 and 107 are in contact.

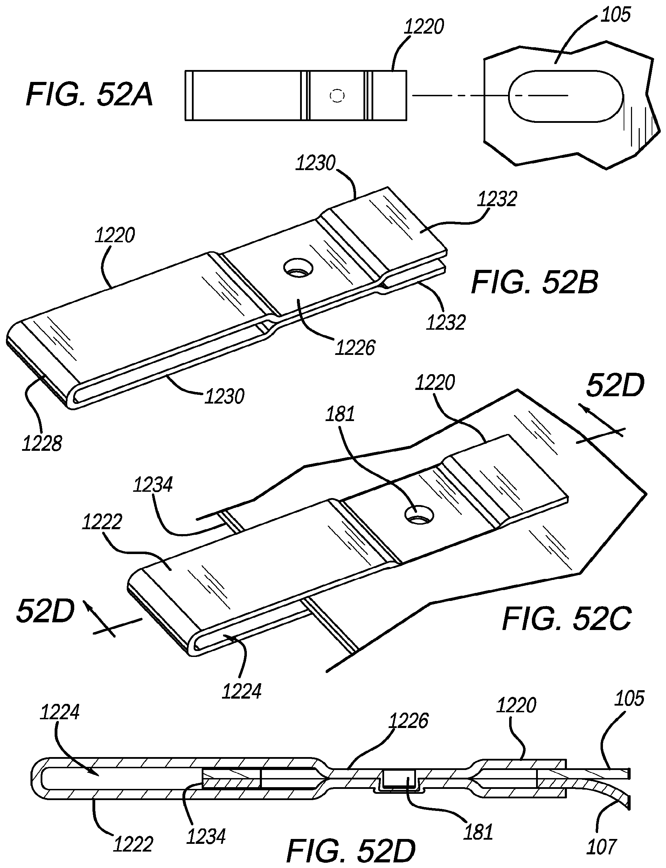

Figures 52A-D show a thirty-fourth embodiment of a clinching clip 1220 similar to that of the Figure 32A-D configuration. The primary difference is that the present clip 1220 has longitudinally extending clevis sections 1222 and longitudinally enlarged cavity 1224 therein between intermediate sections 1226 and a junction 1228. After one or more clinch joints 181 fasten together intermediate sections of legs 1230, distal end sections 1232 and clevis sections 1222 clamp workpieces 105 and 107 therein. However, the portion of clevis sections 1222 overhanging outboard of peripheral edges 1234 of the workpiece flanges, synergistically functions as a look to hold accessories therein, and/or as a tab or handle for manual movement of the workpieces.

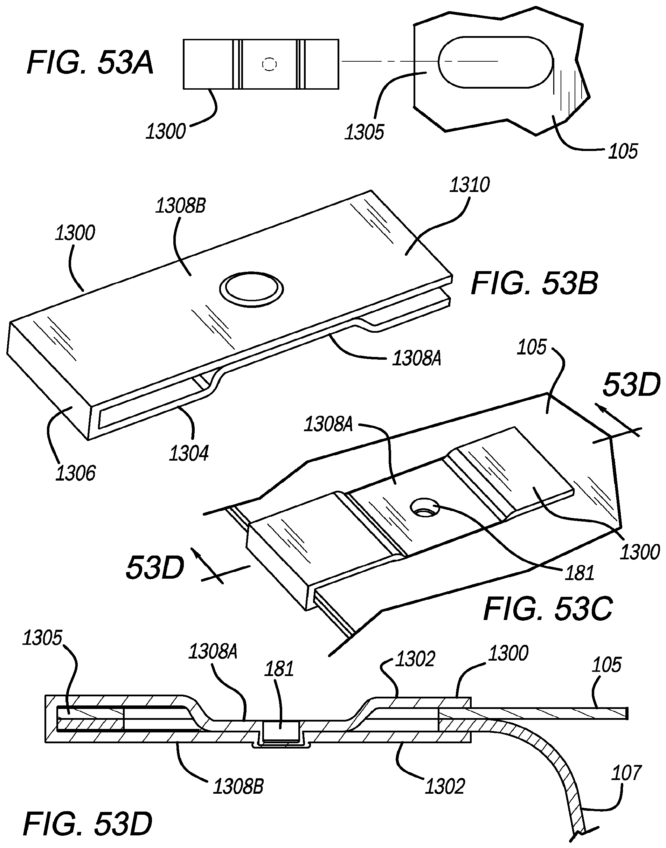

Referring to Figures 53A-D, a thirty-fifth embodiment of a clinching clip 1300 includes legs 1302 with spaced apart and proximal, clevis sections 1304, creating a hollow cavity therein within which is received spanning portions 1305 of workpiece sheets 105 and 107. Clevis sections 1304 are longitudinally bordered by a straight walled (or alternately C-shaped) junction 1306 on one end and one depressed intermediate section 1308A on the other end. Bifurcated and overlapping distal end sections 1310 are spaced apart such that their interior surfaces define an openly accessible opening or receptacle therein for receiving flanges of workpiece sheets 105 and 107.

Notably, an exterior surface of the one intermediate section 1308A is depressed below an exterior plane defined by the adjacent workpiece 105. Differently, an overlapping and parallel (when fully assembled) intermediate section 1308B is coplanar with the connected clevis and distal end sections 1304 and 1310, respectively. Thus, intermediate section 1308A of one of the legs, is twice the depth of the Figure 33D version. This configuration may be applied to any of the other clips described herein.

Next, a thirty-sixth configuration of a clinching clip 1330 is similar to that of Figure 48A-D. However, the present clip 1330 includes depressed retention tabs 1332 in a clevis section 1334 and a distal end section 1336 of only one of legs 1338. Legs 1338 longitudinally extend from a junction 1340 in a bifurcated manner to clamp workpieces 105 and 107 within distal end sections 1336 when one or more clinch joints 181 is created within depressed intermediate sections 1342. A leading end 1344 of each tab 1332 preferably contacts both adjacent inner longitudinal edges of workpiece apertures 1346 in order to temporarily hold and position the clip in place until the clinch joint 181 is formed in clip 1330.

While various embodiments have been disclosed, it should be appreciated that other variations are possible. For example, a different quantity and shape of the punch and clinch joint may be employed although certain benefits may not be realized. Furthermore, the die shape and components may be differently configured although some of the advantages of the present components may not be obtained. It is also envisioned that the periphery of the clip may have different shapes, such as rounded corners adjacent the access slot, but certain advantages will not be observed. Moreover, each of the components disclosed herein may have different dimensions, shapes or materials but certain benefits may not be achieved. Also, any of the clips discussed herein may be fastened to one, two or more workpiece sheets, depending on the end-use application. It should also be appreciated that the terms "top," "bottom," "upper," "lower," "back," "side," "end" and other such phrases are merely relative terms which may vary if the parts are inverted or differently oriented. The method steps may be performed in any order or even simultaneously for some operations. The features of any embodiment may be interchanged with any of the other embodiments, and the claims may be multiply dependent in any combination. Therefore, other variations may fall within the scope of the present invention, as defined by the appended claims.

## Claims

1. A clinching apparatus comprising a metallic clip, the clip comprising:
a junction;
overlapping legs connected by the junction, the legs being spaced apart from each other and having an opening therebetween which is configured to receive at least one workpiece, and the legs being configured to sandwich the at least one workpiece therebetween;
a clinch joint formed by a deformed section of the clip associated with a first of the legs, interlocking with a second section of the clip associated with a second of the legs, the clinch joint being configured to secure the clip to the at least one workpiece;
the clinch joint being internally located away from a periphery of the clip; and
the clip having a lateral width dimension at least ten times greater than a thickness dimension of each of the legs.

2. The apparatus of Claim 1, wherein:
the clip further comprises an overhanging section of the clip being configured to protrude beyond a peripheral edge of the at least one workpiece; and
the overhanging section has a longitudinal length, measured from the peripheral edge to an exterior surface of the junction, greater than a width of the clinch joint
wherein preferably the overhanging section includes a threaded fastener, and/or
wherein preferably the overhanging section includes a hook, and/or wherein preferably the overhanging section includes a wire, cable or conduit-holding ring, and/or
wherein preferably the overhanging section includes an enlarged and mostly cylindrical ring at the junction, configured to receive a hinge pin, the ring having a lateral centerline through a hollow internal are which is raised above a plane defined by an intersection of the workpieces within the clip.

3. The apparatus of any one of the preceding Claims, wherein:
each of the legs of the clip further comprises an intermediate section longitudinally located between the junction and a clevis section having an internal cavity therein;
at least one of the intermediate sections is depressed below a nominal plane defined by an exterior surface of the clevis section and a distal end section of the associated one of the legs;
internal surfaces of the intermediate sections contact against each other within an aperture in the at least one workpiece; and
the clinch joint is located within the intermediate sections.

4. The apparatus of Claim 3, wherein the clevis section traps a spanning portion of the at least one workpiece between the aperture and a peripheral edge of the at least one workpiece, and the spanning portion being longitudinally located between the clinch joint and the junction,
wherein preferably the apparatus further comprises a threaded fastener attached to the clip and extending through a hole in the at least one workpiece and aligned holes in the clevis section of the clip.

5. The apparatus of Claim 3 or 4, wherein the intermediate section has a depressed and arcuate shape, inwardly spaced from a periphery of the clip, or
wherein the intermediate section has a depressed and substantially polygonal shape, inwardly spaced from a periphery of the clip.

6. The apparatus of any one of the preceding Claims, further comprising:
a die including an anvil contacting against one of the legs of the clip; and
a punch oppositely contacting against another of the legs of the clip when deforming the clip to create the clinch joint,
wherein preferably the apparatus further comprises a second punch and a second anvil contacting against the legs of the clip, to create a second clinch joint, wherein the first and second clinch joints are diagonally offset from each other with one being closer to the junction than the other.

7. The apparatus of any one of the preceding Claims, wherein:
the at least one workpiece includes multiple workpiece sheets being thinner or more brittle than the legs of the clip;
the clip is generally U-shaped with a curved or straight walled shape of the junction; and
the legs are substantially parallel where the contact against the multiple workpiece sheets, when the multiple workpiece sheets are secured between the legs.

8. The apparatus of any one of the preceding Claims, wherein the at least one workpiece further comprises door window mullions, the mullions including side walls, and at least one of the mullions including a flange, the clip clinching the flange of one of the mullions to a sidewall of another of the mullions.

9. The apparatus of any one of the preceding Claims, wherein one of the legs has a pre-drilled or pre-punched hole therein through which the clinch joint is formed.

10. The apparatus of any one of the preceding Claims, further comprising a threaded fastener attached to and externally extending from an exterior surface of the clip between the junction and the clinch joint.

11. The apparatus of any one of the preceding Claims, wherein the at least one workpiece includes multiple workpiece sheets that form at least part of an enclosed battery housing.

12. The apparatus of any one of the preceding Claims, wherein at least one of the legs of the clip includes teeth configured to pierce through a workpiece coating and create an electrically conductive interconnection with the at least one workpiece.

13. The apparatus of any one of the preceding Claims, further comprising retention tabs inwardly bent from at least one of the legs, the retention tabs being configured to temporarily hold the clip to the at least one workpiece before the clinch joint is deformed to interlock together the legs.

14. A clinching apparatus comprising:
multiple workpiece sheets including peripheral edges thereof;
a metallic and substantially U-shaped clip comprising overlapping legs connected by a junction, the legs being spaced apart from each other and having an opening which receives the workpiece sheets, the legs sandwiching the workpiece sheets therebetween;
a clinch joint created between segments of the clip associated with the legs, the clinch joint causing the legs to compress against the workpiece sheets; and
the clip having a different characteristic than at least one of the workpiece sheets, wherein at least one of: (a) a thickness of one of the legs is greater than a thickness of the at least one of the workpiece sheets, or (b) the legs are less brittle than the at least one of the workpiece sheets.

15. A clinching apparatus comprising:
a clip including a generally U-shaped portion comprising a bifurcated leg segments, the clip being configured to receive at least one workpiece sandwiched between the leg segments; and
a clinch joint created by a deformed intermediate section of a first of the leg segments interlocking with an intermediate section of a second of the leg segments.

16. A method of joining workpieces together, the method comprising:
(a) overlapping multiple workpiece sheets;
(b) placing edges of the workpiece sheets into an access slot within a bifurcated metallic clip so the clip sandwiches the workpiece sheets therebetween;
(c) advancing a punch toward a die;
(d) longitudinally pushing a punch-side portion of the clip into a die-side portion of the clip;
(e) laterally expanding at least one of the workpiece sheets and/or the punch-side portion of the clip, to create an interlocking joint without a rivet.

17. The method of Claim 16, further comprising creating a hole in the die-side portion of the clip prior to placing the edges into the access slot, and the punch pushing at least one of: the clip portion and the workpiece sheets, through the hole in the clip.

18. The method of Claim 16 or 17, further comprising clinching the interlocking joint between the punch and the die,
wherein the clip is thicker than at least one of the workpiece sheets, and/or wherein the clip is more ductile than at least one of the workpiece sheets.

19. The method of any one of Claims 16 to 18, further comprising:
clinching the interlocking joint at depressed intermediate sections of the clip, the intermediate sections being located between: (a) a junction connecting the leg segments and (b) spaced apart distal leg sections which sandwich the workpiece sheets; and
contacting internal and facing surfaces of the intermediate sections against each other, within an aperture in the workpiece sheets, while performing the clinching.

20. The method of any one of Claims 16 to 19, further comprising clinching together window mullions with the clip.
